(19) Europäisches Patentamt
European Patent Office
Office européen des brevets

(11) Veröffentlichungsnummer: **0 406 615 B1**

(12) **EUROPÄISCHE PATENTSCHRIFT**

(45) Veröffentlichungstag der Patentschrift: **23.08.95**

(51) Int. Cl.[6]: **F16H 61/02**, B60K 41/04, F16H 59/00

(21) Anmeldenummer: **90111534.5**

(22) Anmeldetag: **19.06.90**

# (54) Verfahren und Vorrichtung zur Steuerung eines selbsttätig schaltenden Getriebes.

(30) Priorität: **05.07.89 DE 3922051**

(43) Veröffentlichungstag der Anmeldung: **09.01.91 Patentblatt 91/02**

(45) Bekanntmachung des Hinweises auf die Patenterteilung: **23.08.95 Patentblatt 95/34**

(84) Benannte Vertragsstaaten: **AT DE ES FR GB IT NL SE**

(56) Entgegenhaltungen:
**EP-A- 0 038 083**
**EP-A- 0 194 799**
**EP-A- 0 391 387**
**WO-A-89/01421**
**GB-A- 2 102 086**
**US-A- 4 889 015**
**EP-A- 0 144 608**
**EP-A- 0 304 089**
**WO-A-86/02112**
**DE-A- 3 615 961**
**US-A- 4 841 815**

**PATENT ABSTRACTS OF JAPAN vol. 13, no. 567 (M-908)15. Dezember 1989 & JP-A-1 238 748 (MITSUBISHI ) 22. September 1989**

(73) Patentinhaber: **Dr.Ing.h.c. F. Porsche Aktiengesellschaft**
**Porschestrasse 42**
**D-70435 Stuttgart (DE)**

Patentinhaber: **ROBERT BOSCH GMBH**
**Postfach 30 02 20**
**D-70442 Stuttgart (DE)**

Patentinhaber: **ZF FRIEDRICHSHAFEN Aktiengesellschaft**

**D-88038 Friedrichshafen (DE)**

(72) Erfinder: **Wehr, Thomas**
**Bauernstrasse 133**
**D-7257 Ditzingen 1 (DE)**
Erfinder: **Runge, Wolfgang, Dr.**
**Goethestrasse 17**
**D-7980 Ravensburg (DE)**
Erfinder: **Gruhle, Wolf-Dieter, Dr.**
**Grabenstrasse 12**
**D-7992 Tettnang 1 (DE)**
Erfinder: **Wendel, Peter**
**Argenstrasse 33**
**D-7993 Kressbronn (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**ATZ AUTOMOBILTECHNISCHE ZEITSCHRIFT. Bd. 85, Nr. 6, 1983, STUTTGART DE Seiten 401 - 405; LORENZ: 'Einsatz des Viergang-Automatikgetriebes 4 HP 22 mit elektronisch-hydraulischer Steuerung'**

**PATENT ABSTRACTS OF JAPAN vol. 10, no. 253 (M-512)29. August 1986 & JP-A-61 081 824 (HONDA) 25. April 1986**

Erfinder: **Eschrich, Gerhard, Dipl.-Ing.**
**Gehenbühlstrasse 23**
**D-7016 Gerlingen (DE)**
Erfinder: **Schwamm, Ronald, Dipl.-Ing.**
**Hasenbergstrasse 40**
**D-7016 Gerlingen (DE)**
Erfinder: **Stehle, Heinz, Dipl.-Ing.**
**Jakobsäcker 4**
**D-7251 Weissach (DE)**
Erfinder: **Hamm. Ludwig, Dipl.-Ing**
**Eschenriedstrasse 47**
**D-7032 Sindelfingen (DE)**
Erfinder: **Foeldi, Thomas, Dipl.-Ing.**
**Muggensturmstrasse 33**
**D-7000 Stuttgart 31 (DE)**
Erfinder: **Seidel, Willi, Dipl.-Ing.**
**Theodor-Heuss-Strasse 101**
**D-7147 Eberdingen-Hochdorf (DE)**
Erfinder: **Judaschke, Udo, Dipl.-Ing.**
**Elbinger Weg 8**
**D-4690 Herne 1 (DE)**
Erfinder: **Petersmann, Joseph, Dipl.-Ing.**
**Herzogstrasse 8**
**D-7251 Wimsheim (DE)**

## Beschreibung

Die Erfindung betrifft eine Verfahren und eine Vorrichtung entsprechend den in den Ansprüchen 1 und 31 aufgeführten Maßnahmen.

Üblicherweise wird eine automatische Getriebesteuerung nach folgenden Kritieren ausgelegt: Entweder soll sie eine möglichst ökonomische oder eine möglichst leistungsorientierte Fahrweise zulassen. Aufgrund der Eigenschaften des Ottomotors ist es nicht möglich, beide Kriterien zugleich zu erfüllen. Deshalb kommt häufig nur ein Kompromiß zwischen beiden Extrema in Frage, da ein rein verbrauchsorientiertes Schaltprogramm nicht genügend Sicherheitsreserven bei kritischen Verkehrssituationen bietet und bei einem leistungsorientierten Schaltprogramm der Kraftstoffverbrauch zu hoch ist.

Eine weitere Möglichkeit ist die manuelle Umschaltung zwischen einem "Economy-" und einem "Power-" Programm, (Automobiltechnische Zeitschrift, Heft 6/1983, Seite 401 bis 405). Bei dieser Lösung muß der Fahrer erst einem Umschalter betätigen, bevor er das entsprechende Schaltprogramm zur Verfügung gestellt bekommt. Dem Fahrer werden nun zwei alternative Extrema angeboten, die jedoch entweder nur eine verbrauchsorientierte oder eine leistungsorientierte Fahrweise zulassen.

Aus der DE-PS 33 41 652 ist es in diesem Zusammenhang bekannt geworden, diese manuelle Umschaltung zu automatisieren. Hierzu werden bei einem selbsttätig schaltenden Getriebe eines Kraftfahrzeuges, dessen Brennkraftmaschine mittels eines Leistungssteuerorganes beeinflußbar ist, Gangstufen des Getriebes über Schaltprogramme wenigstens abhängig von der Stellung des Leistungssteuerorganes und der Motordrehzahl automatisch geschaltet werden, ein der Stellung des Leistungssteuerorganes proportionales Signal zyklisch oder antizyklisch abgetastet wird und der abgetastete Signalwert der Stellung des Leistungssteuerorganes zur Gewinnung einer Umschaltstrategie zwischen Fahrprogrammen herangezogen wird.

Mit dieser Steuereinrichtung ist es somit möglich, den Fahrstil des Fahrers durch Erfassen einer hierfür repräsentiven Größe nachzubilden. Es hat sich jedoch gezeigt, daß in bestimmten Fahrzuständen, bspw. auf kurvenreichen Strecken, mit dieser Einrichtung der Fahrstil oder eine Fahrsituation nicht in einem wünschenswerten Maß nachgebildet werden kann.

Schließlich ist dem auf dem Gebiet der Konstruktion von automatisch schaltenden Getrieben tätigen Fachmann bekannt, daß zur Steuerung eines selbsttätig schaltenden Getriebes ein oder mehrere Schaltprogramme vorgesehen sein können, aus denen einerseits abhängig von einer Größen Fahrleistung, Motorlast, Gaspedalstellung, Saugrohrunterdruck oder Drosselklappenöffnung und andererseits abhängig von einer oder mehrerer der Größen Fahrgeschwindigkeit, Abtriebsdrehzahl oder Motordrehzahl Schaltpunkte zur Bestimmung der einzulegenden Gangstufe bestimmt werden.

Es ist daher Aufgabe der Erfindung, ein Verfahren und eine Vorrichtung zu Steuerung eines selbstätig schaltenden Getriebes zu schaffen, das die vorstehenden Nachteile vermeidet.

Diese Aufgabe wird erfindungsgemäß durch die Maßnahmen bzw. Merkmale der Ansprüche 1 bzw. 31 gelöst. Weitere, die Erfindung ausgestaltende Merkmale sind in den Unteransprüchen enthalten.

Die Vorteile der Erfindung sind in erster Linie darin zu sehen, daß ein Verfahren und eine Vorrichtung zur Steuerung eines selbsttätig schaltenden Getriebes geschaffen ist, das sich ausgehend von einem möglichst verbrauchsoptimalen Schaltprogramm dynamisch an das Fahrverhalten und die gerade herrschende Fahr- bzw. Verkehrssituation anpaßt, ohne daß zusätzliche Bedienelemente betätigt werden müssen. Dies wird mit einem nur geringfügig höheren Aufwand an durch Sensoren zu erfassenden Betriebs- oder Fahrparametern erreicht, so daß eine bereits vorhandene Getriebesteuerung für ein elektrohydraulisches Getriebe, bspw. vom Typ 4HP22 der Fa. ZF (siehe obiger Zeitungsartikel), ohne größeren Aufwand an diese neue Lösung anpaßbar ist. Es ist neben einem einzigen zusätzlichen Sensor lediglich eine Änderung des Steuerungverfahrens notwendig.

Hierdurch ist gewährleistet, daß ein Fahrer eines Kraftfahrzeugs, das mit einer derartigen Vorrichtung bzw. einer nach diesem Verfahren arbeitenden Steuerung für das selbsttätig schaltende Getriebe ausgestattet ist, immer jeweils die Fahrleistung bekommt, die er anfordert, wobei in allen Bereichen immer auf möglichst niedrigen Kraftstoffverbrauch geachtet wird.

Die Erfindung wird nachstehend anhand der in den Zeichnungen dargestellen Ausführungsformen erläutert.

Es zeigt:

- Fig. 1 Ein Blockschaltbild einer elektorhydraulischen Steuerung eines selbsttätig schaltenden Getriebes eines Kraftfahrzeugs,
- Fig. 2 ein Blockdiagramm zur Ermittlung einer Fahraktivität bzw. eines Schaltprogramms,
- Fig. 3 ein Kennfeld zur Ermittlung eines Schaltprogramms aus einer ersten Fahraktivität,
- Fig. 4 Hochschaltlinien entsprechend der Schaltprogramme nach Fig. 3,
- Fig. 5 Rückschaltlinien entsprechend der Schaltprogramme nach Fig. 3,

Fig. 6 ein erstes Kennfeld zur Ermittlung einer ersten primären Kenngröße,

Fig. 7 ein zweites Kennfeld zur Ermittlung einer zweiten primären Kenngröße,

Fig. 8 ein drittes Kennfeld zur Ermittlung einer dritten primären Kenngröße,

Fig. 9 ein viertes Kennfeld zur Ermittlung einer vierten primären Kenngröße,

Fig. 10 ein fünftes Kennfeld zur Ermittlung einer fünften primären Kenngröße,

Fig. 11 ein Grenzlinie aqg = f(v), oberhalb der Gangstufenwechsel vermieden werden,

Fig. 12 eine Kennlinie, die eine Abhängigkeit von Zeiträumen T2, T3, T4, T5 und T6 von einer Fahraktivität SK(t) zeigen,

Fig. 13 eine Grenzkennlinie azsg(nmot) zur Erkennung von Zug-/Schubetrieb.

In Fig. 1 ist mit 1 eine elektro-hydrauliche Steuerung eines selbsttätig schaltenden Kraftfahrzeuggetriebes 2 gezeigt, wie es bspw. im Bosch "Technische Berichte", 7 (1983) 4 auf den Seiten 160 bis 166 und in der ATZ 85 (1983) 6 auf den Seiten 401 bis 405 beschrieben ist.

Ein Steuergerät 3 steuert in Abhängigkeit von einem Kick- Down- Signal kd eines Kick-Down-Gebers 4 am Fahrpedal des Kraftfahrzeugs sowie einem Leerlaufsignal 11 eines Drosselklappenschalters 5 eines Drosselklappenwinkel-Signals alpha eines Drosselklappenwinkelgebers 6 und eines Motordrehzahlsignals mot eines Motordrehzahlgebers 7 einer nichtgezeigten Brennkraftmaschine und eines Fahrgeschwindigkeitsignals v (Getriebeausgangsdrehzahlsignal), eines Getriebeausgangsdrehzahlgebers 8

- einen Druckregler 9 für ein Hydraulikfluid (Signalausgang ds)
- ein erstes Elektromagnetventil 10 zur Steuerung eines Wandlers bzw. einer Wandlerüberbrückungskupplung (Signalausgang wk)
- ein zweites Elektromagnetventil 11 zur Steuerung eines Gangstufenwechsels zwischen den Gangstufen I und II (Signalausgang sI/II)
- ein drittes Elektromagnetventil 12 zur Steuerung des Gangstufenwechsels zwischen den Gangstufen II und III (Signalausgang sII/III) und
- ein viertes Elektromagnetventil (13) zur Steuerung des Gangstufenwechsels zwischen den Gangstufen III/IV (Signalausgang sIII/IV).

Die Steuerung ist hierbei üblicherweise vom Fahrzeugführer über einen nicht gezeigten Wählhebel zur Vorwahl von Fahrstufen P, R, N, D, 3, 2, 1 beeinflußbar. Hiermit sind die Fahrstufen P (Parken), R (Rückwärtsgangstufe), N (Leergangstufe), D (selbsttätige Schaltung aller vier Gangstufen IV, III, II, I), 3 (selbsttätige Schaltung der drei untersten Gangstufen III, II, I) und 2 (selbsttätige Schaltung der Gangstufen II und I) und 1 (Festlegung der ersten Gangstufe I) anwendbar. Bei dem oben beschriebenen Getriebe ist ferner ein Programmwählschalter vorgesehen, mit dem wenigstens zwei Schaltprogramme, nach denen die vier Gangstufen in der Stufe D geschaltet werden, manuell anwählbar sind.

Diese manuelle Anwahl der Schaltprogramme soll nun automatisiert werden, so daß sich die Getriebesteuerung selbsttätig an den Fahrstil eines Fahrers bzw. eine gerade vorherrschende Fahrsituation anpaßt. Eine derartige Getriebesteuerung ist bspw. aus der DE 33 41 652 C2 bekannt. Dort wird durch Abtasten des Fahrpedals bzw. Drosselklappenwinkels eine den Fahrstil nachbildende Größe erzeugt. Es hat sich jedoch gezeigt, daß diese Steuerung in manchen Fahrsituationen den Fahrstil nicht ausreichend genug nachbildet. Die Getriebesteuerung 1 wird deshalb um einen Querbeschleunigungsgeber 14, der ein Querbeschleunigungssignal aq erzeugt, und einen Geschwindigkeitsgeber 15, der eine Geschwindigkeit vref an einer nicht angetriebenen Achse des Fahrzeuges erfaßt, erweitert.

Entsprechend Fig. 2 wird daher eine Bestimmung einer Fahraktivität SK1(t) aus wenigstens noch einem weiteren, zyklisch und/oder antizyklisch abgetasteten Betriebs- oder Fahrparameter des Kraftfahrzeugs, wie z. B. der Motordrehzahl nmot, der Querbeschleunigung aq und/oder der Fahrgeschwindigkeit v abgeleitet. Durch Abtastung und vorzugsweise digitale Filterung (nach einem PT1- Algorithmus) wird mittels der Filter 16, 17 und 18 ein Drosselklappen-Signalwert alpha(t), ein Motordrehzahl- Signalwert nmot (t) und ein Querbeschleunigungs- Signalwert aq (t) ermittelt.

Aus der mittels des Getriebeausgangsdrehzahlgebers 8 ermittelten Fahrgeschwindigkeit v wird durch Differenzenquotientenbildung und anschließende digitaler Filterung (ebenfalls nach einem PT1- Algorithmus) ein Längsbeschleunigungs- Signalwart alb(t), der der Ableitung der Fahrgeschwindigkeit nach der Zeit dv(t)/dt für dv(t)/dt > 0 entspricht, und ein Längsverzögerungs- Signalwert alv(t), der der zeitlichen Ableitung der Fahrgeschwindigkeit dv(t)/dt für dv(t)/dt < 0 entspricht, durch Filter 19 und 20 ermittelt.

Die Abtastung des Drosselklappenwinkels alpha erfolgt hierbei alle 30 Millisekunden, während die Motordrehzahl nmot, die Fahrzeugquerbeschleunigung aq und die Fahrzeuggeschwindigkeit v alle 40 Millisekunden abgetastet werden. Ein neuer Wert der Längsbeschleunigung und der Längsverzögerung wird hieraus alle 100 Millisekunden abgeleitet. Im Falle des Drosselklappenwinkels alpha und der Fahrzeugquerbeschleunigung aq kann es sinnvoll sein, die digitale Filterung mit unterschiedlichen Anstiegs- und Abfallzeiten zu bestimmen. Hierbei wird vorzugsweise der Anstieg stärker gewichtet als der Abfall.

Über ein erstes Kennfeld 21 wird aus dem Drosselklappen-Signalwert alpha(t) eine erste primäre Kenngröße SKP1(t) = f(alpha(t), dv/dt) über von der zeitlichen Ableitung der Fahrgeschwindigkeit dv(t)/dt abhängigen Kennlinien, und über ein zweites Kennfeld 22 eine zweite primäre Kenngröße SKP2(t) = f(nmot(t), g) über von der Gangstufe g abhängige Kennlinien aus dem Motordrehzahl- Signalwert nmot(t) erzeugt.

Ein drittes Kennfeld 23 leitet über vom Fahrgeschwindigkeits- Signalwert v(t) abhängige Kurven über ein drittes Kennfeld 23 eine dritte primäre Kenngröße SKP3(t) = f(aq(t), v(t)) ab. Aus dem Längsbeschleunigungs- Signalwert alb(t) wird über ein viertes Kennfeld 24 mittels von dem Fahrgeschwindigkeits-Signalwert v(t) abhängenden Kennlinien eine vierte primäre Kenngröße SKP4(t) = f(alb(t), v(t)) abgeleitet. Schließlich erzeugt ein fünftes Kennfeld 25 über vom Fahrgeschwindigkeits- Signalwert v(t) abhängige Kennlinien eine fünfte primäre Kenngröße SKP5(t) = f(alv(t), v(t)). Die jeweils zweite Einflußgröße für die Kennfelder 21 bis 25 ist aus Übersichtlichkeitsgründen lediglich symbolisch dargestellt.

Aus diesen fünf primären Kenngrößen SKP1(t) bis SKP5(t) wird über eine Verknüpfungsfunktion 26 eine sekundäre Kenngröße SKS(t) gewonnen und abgespeichert. Die Verknüpfungsfunktion 26 wird vorzugsweise als Maximalwertauswahl aus den fünf primären Kenngrößen (SKS(t) = MAX(SKP1, SKP2, SKP3, SKP4, SKP5) ausgeführt.

Aus dieser sekundären Kenngröße SKS(t) wird mittels eines digitalgen Filteralgorithmus 27 mit PT1-Verhalten eine erste Fahraktivität SK1(t) erzeugt, indem der neu gewonnene Wert der sekundären Kenngröße SKS(t) und ein Wert der einen ersten Berechnungszeitraum T1 vorher ermittelten und abgespeicherten ersten Fahraktivität SK1(t-T1) zu einer gewichteten Summe zusammengesetzt wird: SK1(t) = (1/A)*(B*SKS(t) + (A-B)*SK1(t-T1)). Die beiden Gewichtungsfaktoren A und B können hierbei für wachsende Werte der sekundären Kenngröße SKS(t) zu A = 100 und B = 4 und für fallende sekundäre Kenngrößen SKS(t) zu A = 100 und B = 2 gewählt werden. Der Berechnungszeitraum T1 beträgt hierbei vorzugsweise eine Sekunde.

Selbstverständlich ist es auch möglich, anstatt des digitalen Filteralgorithmus 27 auch einen Algorithmus einzusetzen, bei dem die Werte der sekundären Kenngrößen SKS(t) abgespeichert und mit jedem neu gewonnenen Wert der sekundären Kenngröße SKS(t) eine Anzahl (m + 1) bereits vorher gewonnener und abgespeicherter Werte dieser Kenngröße aktualisiert werden, wobei aus (m + 1) abgespeicherten Werten der sekundären Kenngröße SKS(t-iDT), i = 0, 1, 2. . . , m durch Gewichtung und Summenbildung eine erste Fahraktivität SK1(t) bestimmt wird: SK1(t) = SK1'(t) = (1/ΣAi)*Σ (Ai*SKS(t-iDT)); i = 0, 1, . . . , m, wobei DT der Berechnungszeitraum bzw. ein Abtastintervall ist.

Die Gewichtungsfaktoren Ai werden hierbei mit größer werdenden Werten von i immer kleiner; hiermit ist gewährleistet, daß aktuelle Werte stärker gewichtet werden als früher abgespeicherte.

Die erste Fahraktivität SK1(t) kann nun zur Auswahl der Schaltprogramme SKFj bzw. zur gezielten Veränderung von Schaltentscheidungen herangezogen werden. Dies geschieht über ein sechstes Kennfeld 28, welches dem zwischen 0 und 1 liegenden Wert der Fahraktivität SK1 (t) ein Schaltprogramm (Schaltkennfeld SKFj = F (alpha, nmot), j = 1, 2, . . . , 5) aus einer Reihe von zwischen einem verbrauchsoptimierten Schaltprogramm SKF1 und einem leistungsoptimierten Schaltprogramm SKF5 liegenden Schaltprogrammen SKFj auswählt, derart, daß mit wachsenden Werten der Fahraktivität SK1(t) mehr leistungsoptimierte Schaltprogramme gewählt werden. Das sechste Kennfeld SKFj = f(SK1(t)) ist hierbei hysteresebehaftet, um ein ständiges Hin- und Herschalten zwischen den Schaltprogrammen bei kleinen Änderungen um einen stationären Wert von SK1(t) zu vermeiden. Diese sechste Kennfeld ist in Fig. 3 in vergrößertem Maßstab gezeigt; die Schalthysteresebreite liegt hierbei bei etwa ±0,02.

Derartige Schaltprogramme (Schaltkennfelder, nach denen die Gangstufen g entsprechend dem Drosselklappenwinkel alpha und der Motordrehzahl nmot geschaltet werden), sind in Figure 4 in Form von Hochschaltlinien vom dritten Gang g = III zum vierten Gang g = IV und in Figur 5 in Form von Rückschaltlinien vom vierten Gang g = IV zum dritten Gang g = III gezeigt, wobei die Schaltlinien aus den entsprechenden Schaltprogrammen bzw. Schaltkennfeldern SKF1 bis SKF5 entnommen sind.

In Figur 6 ist das erste Kennfeld SKP1(t) = f(alpha(t), dv(t)/dt), 21, gezeigt. Dieses erste Kennfeld SKP1 weist über ansteigende Kurven wachsenden Werten des Drosselklappensignalwerts alpha(t) größere Werte der ersten primären Kenngröße SKP1 zu. Der Anstieg der Kurven f(alpha(t)) ist von der zeitlichen Änderung des Fahrgeschwindigkeitssignalwerts dv(t)/dt abhängig, wobei mit wachsender zeitlicher Änderung der Fahrgeschwindigkeitssignalwerte dv(t)/dt) die Steigung zunimmt. Hierdurch wird insbesondere bei stationärer Fahrweise ein ungewollter Wechsel des gerade angewählten Schaltkennfelds vermieden.

Selbstverständlich ist es auch möglich, den Wert der ersten primären Kenngröße SKP1 (t) anstatt aus dem Kennfeld f(alpha, dv(t)/dt) über eine einzige Kennlinie f(alpha(t)) zu ermitteln und diese mit einem progressiv mit der zeitlichen Änderung der Fahrgeschwindigkeits- Signalwerte dv(t)/dt anwachsenden Gewichtungsfaktor zu gewichten.

Das in Figur 7 gezeigte zweite Kennfeld SKP2 = f(nmot(t),g), 22 weist über ansteigenden Kurven wachsenden Werten des Motordrehzahl- Signalwerts (nmot(t)) größere Werte der zweiten primären Kenngröße SKP2(t) zu. Der Anstieg der Kurven f(nmot(t)) ist hierbei gangstufenabhängig und nimmt mit wachsender Gangstufe g ab. Hierdurch wird erreicht, daß höhere Drehzahlen in niedrigeren Gangstufen eine stärkere Gewichtung erfahren als in höheren Gangstufen; bspw. zeugen nmot = 4000/min in der ersten oder zweiten Gangstufe g = I, g = II von einer mehr leistungsorientierten Fahrweise als die gleiche Motordrehzahl bei eingelegter vierter Gangstufe g = IV.

Entsprechend Figur 8 weist das dritte Kennfeld SKP3 = f(aq(t), v (t)), 23, über ansteigende Kurven wachsenden Werten des Querbeschleunigungs- Signalwerts aq(t) größere Werte der dritten primären Kenngröße SKP3(t) zu. Der Anstieg der Kurven f-(aq(t)) ist hierbei geschwindigkeitsabhängig und nimmt mit wachsenden Fahrgeschwindigkeits- Signalwerten v(t) zu. Hierdurch wird eine Anwahl zu stark leistungsorientierter Schaltprogramme im Stadtverkehr vermieden; unter anderem wird auch die Stärke der Fahrzeugbeschleunigung bei höheren Geschwindigkeiten als stärker empfunden.

Das in Fig. 9 gezeigte vierte Kennfeld SKP4 = f-(alb(t), v(t)), 24, weist Längsbeschleunigungssignalwerten alb(t) über ansteigende Kurven wachsenden Werten des Längsbeschleunigungs- Signalwerts alb(t) größere Werte der vierten primären Kenngröße SKP4(t) zu. Auch hierbei ist die Steigung der ansteigenden Kurven geschwindigkeitsabhängig bewertet und nimmt mit wachsender Fahrgeschwindigkeits- Signalwerten v(t) zu; hierdurch wird eine Anwahl zu stark leisungsorientierter Schaltprogramme vermieden und es kann das unterschiedliche Beschleunigungsvermögen von Fahrezugen berücksichtigt werden.

Das in Figur 10 gezeigte fünfte Kennfeld SKP5 = f(alv(t), v(t)), 25, weist über ansteigende Kurven wachsenden Werten des Längsverzögerungs- Signalwerts alv(t) größere Werte der fünften primären Kenngröße SKP5(t) zu. Die Steigung der ansteigenden Kurven ist wiederum geschwindigkeitsabhängig und nimmt mit wachsenden Fahrgeschwindigkeits- Signalwerten v(t) zu.

Damit einem Fahrer des Kraftfahrzeugs bei kritischen Verkehrssituationen sofort die volle Leistungsfähigkeit seines Kraftfahrzeugs zur Verfügung steht, kann es ferner vorgesehen sein, das leistungsoptimierte Schaltprogramm (SKS5) anzuwählen, sofern die zeitliche Änderung des Drosselklappensignalwerts dalpha(t)/dt größer als ein erster Drosselklappengeschwindigkeitsgrenzwert alphag1 ist. Hierbei wird zum vorher angewählten Schaltprogramm zurückgekehrt, wenn der Drosselklappensignalwert alpha(t) um einen festgesetzten, mit der Fahraktivität SK(t), SK1(t), SK2(t) veränderlichen Wert (alphag) und einen festgelegten Teil (fak) des erreichten maximalen Drosselklappen-Signalwerts zurückgenommen wird (alpha(t) ≦ = afg + (fak*alpha(t-T1)). Hierbei kann die Anwahl des leistungsoptimierten Schaltprogramms (SKF5) auch stufenweise erfolgen.

Bei einem mit einer Wandlerüberbrückungskupplung ausgestatteten Getriebe kann es ferner vorteilhaft sein, die Wandlerüberbrückungskupplung mit steigenden Werten der Fahraktivität SK(t), SK1(t), SK2(t) nach Schaltvorgängen später zu schließen bzw. vor Schaltvorgängen früher zu öffnen bzw. erst bei höheren Motordrehzahlsignalwerten, bspw. nmot = 3400/min bei SKF5 gegenüber nmot = 1000/min bei SKF1 geschlossen gehalten wird.

Weist die Getriebesteuerung ferner ein Kick-Down- Schaltprogramm SKFKD auf, so kann dies bei vollem Durchtreten des Fahrpedals (alpha = alphamax) angewählt und solange aktiviert bleiben, bis der Drosselklappen-Signalwert (alpha-(t) einen festgelegten oder mit der Fahraktivität (SK(t), (SK1(t), (SK2(t)) veränderlichen zweiten Grenzwert (alphag2) unterschreitet. Dieser Grenzwert (alphag2) kann hierbei mit wachsender Fahraktivität zu niedrigeren Werten verschoben werden.

Schließlich kann die Auswahl des Schaltprogramms (Schaltkennfeld SKFj = f(alpha, nmot), j = 1, 2, . . . , 5) über das sechste Kennfeld SKFj = f(SK-(t)) auch aus einer aus der ersten Fahraktivität SK1(t) und einer zweiten Fahraktivität SK2(t) zusammengesetzten Gesamtfahraktivität SK(t) erfolgen, indem diese beiden Fahraktivitäten über eine gewichtete Summe SK(t) = (A1*SK1(t) + A2*SK2(t))/-(A1 + A2) zusammengesetzt werden. Hierbei wird die zweite Fahraktivität SK2(t) aus einer gewichteten Summe SK2(t) = (1/A)*(B*SKZ(t) + (A-B)*SK2(t-T1)) aus einer neu gewonnenen Zwischengröße SKZ(t) und einem Wert der einem ersten Berechnungszeitraum T1 vorher ermittelten und abgespeicherten zweiten Fahraktivität SK2(t-T1) bestimmt.

Die Zwischengröße SKZ(t) wird hierbei aus der gewichteten Summe SKZ(t) = (alb(t)/albmax(g) + alv(t)/alvmax(g) + aq(t)/aqmax)/3 eines Quotienten aus dem Längsbeschleunigungs-Signalwert alb(t) und, einer gangabhängigen maximalen Fahrzeugbeschleunigung albmax(g), eines Quotienten aus einem Längsverzögerungs-Signalwert alv(t) und einer gangabhängig maximalen Fahrzeugverzögerung alvmax(g), und dem durch eine maximale Fahrzeugquerbeschleunigung aqmax geteilten Querbeschleunigung-Signalwerts aq(t) ermittelt.

Schließlich wird es sinnvoll sein, bei einer ersten Bestimmung der Werte der ersten und zweiten Fahraktivität SK1(t), SK2(t) bzw. bei Neustart (Initialisierung) eines dem Verfahren entsprechenden Programms für eine auf Mikrorechnerbasis aufgebaute Getriebesteuerung die Werte SK1(t-T1), SK2(t-T1) auf einen Anfangswert zu setzen.

Neben der Beeinflussung der Schaltprogramme durch die Fahraktivität SK1, SK2 kann es ferner sinnvoll sein, zur Reduzierung von Schaltungen zusätzliche Kriterien einzuführen, die wiederum auch von der Fahraktivität SK1, SK2 abhängig sein können. So ist es insbesondere wünschenswert, daß eine Hochschaltung des Getriebes vermieden wird, wenn das Fahrzeug sich bspw. einer Kurve nähert und der Fahrer vom Fahrpedal geht.

Es hat sich hierbei gezeigt, daß eine derartige Kurvenerkennung stattfinden kann, indem man die zeitliche Änderung des Drosselklappen- Signalwerts dalpha/dt abtastet. In der Regel nimmt nämlich ein Fahrer vor einer Kurve das Fahrpedal bzw. hiermit natürlich auch die Drosselklappe schneller zurück als er es unter normalen Umständen tut, um bspw. die Fahrgeschwindigkeit zu reduzieren.

Eine bei Loslassen des Fahrpedals von üblichen Getriebesteuerungen vorgenommene Hochschaltung wird hierbei um einem zweiten Zeitraum (T2) verzögert, sofern eine Änderungsgeschwindigkeit dalpha/dt des Drosselklappensignalwerts alpha(t) einen dritten Grenzwert alphag3 unterschreitet, wobei der zweite Zeitraum T2 von der Fahraktivität SK1(t), SK2(t) abhängen kann.

Dieser zweite Zeitraum T2 wird ferner bei einem Bremsvorgang des Kraftfahrzeugs zu Null gesetzt und nach Beendigung des Bremsvorgangs eine Hochschaltung um einen dritten, von der Fahraktivität abhängenden Zeitraum T3 verzögert. Damit wird erreicht, daß auch bei und unmittelbar nach einem Bremsvorgang nicht geschaltet wird.

Ferner wird ein Gangstufenwechsel vermieden und/oder die Zeiträume T2, T3 zu Null gesetzt, sofern der Betrag des Querbeschleunigungs- Signalwerts |aq| eine von der Fahrgeschwindigkeit v(t) abhängige und/oder mit der Fahraktivität SK(t), SK1(t), SK2(t) veränderliche Grenzlinie aqg = f(v(t)), wie sie bspw. in Figur 11 gezeigt ist, überschreitet.

In gleicher Weise wird der Gangstufenwechsel vermieden, solange nach Unterschreiten der Grenzlinie aqg = f(v(t)) ein festgelegter oder mit der Fahraktivität veränderlicher vierter Zeitraum T4 noch nicht verstrichen ist; hierdurch werden unnötige Lastwechsel bei schnellen Kurvenfahrten, die unter Umständen zu Fahrzeugunstabilitäten führen können, vermieden.

Eine Abhängigkeit der Zeiträume T2, T3 , T4 und einem später noch beschriebenen Zeitraum T5 von der Fahraktivität SK(t), SK1(t), SK2(t) ist in Figur 12 gezeigt. Diese Zeiträume nehmen vorzugsweise mit wachsenden Werten der Fahraktivität zu und liegen bspw. zwischen 1,6s und 3s.

Es kann ferner vorgesehen sein, eine Hochschaltung nach Ablauf der Zeiträume T2, T3 und T4 um einen weiteren, von der Fahraktivität abhängigen fünften Zeitraum T5 zu verzögern, wenn der Motor noch nicht wieder im Zugbetrieb ist und die zeitliche Änderung des Fahrgeschwindigkeits-Signalwerts dv(t)/dt noch keine posiviten Werte angenommen hat, bspw. um einem Fahrer nach Durchfahren einer Kurve oder nach dem Bremsen etwas Zeit zu lassen (ohne daß eine Hochschaltung erfolgt), bis er wieder Gas gibt.

Hierbei wird der Zugbetrieb erkannt, wenn der Drosselklappensignalwert alpha(t) größer als eine von der Motordrehzahl abhängige Grenzkennlinie azsg = f(nmot), siehe Figur 13, ist und die zeitliche Änderung der Fahrzeuggeschwindigkeit dv(t)/dt positive Werte annimmt.

Als übergeordnete Funktion zu Vermeidung von instabilen Fahrzuständen, bspw. übermäßigem Schlupf an der Antriebsachse, kann es vorgesehen sein, diese Möglichkeiten der Unterbindung einer Hochschaltung nur dann zuzulassen, wenn eine Differenzgeschwindigkeit Dv = vref-v, Dv(t) = vref(t)-v(t) zwischen einer Geschwindigkeit vref, vref(t) einer nichtangetriebenen Achse und der an der angetriebenen Achse erfaßten Fahrgeschwindigkeit v-(t) (gemessen über die Getriebeausgangsdrehzahl) eine zulässigen Differenzgeschwindigkeitswert Dvzul nicht überschreitet. Der Schlupf an der angetriebenen Achse wird hierbei durch die Differenzgeschwindigkeit Dv nachgebildet.

Ergänzend kann es hierzu vorgesehen sein, bei Überschreiten des zulässigen Differenzgeschwindigkeitswert Dvzul

- eine Wandlerüberbrückungskupplung eines mit einem Drehmomentwandler ausgestatteten Getriebes zu öffnen,
- eine Haltezeit T6 zu setzen, während der eine Hochschaltung nicht unterbunden werden kann,
- eine eingelegte Gangstufe g um eins zu erhöhen und
- Rückschaltungen zu verhindern,

wobei diese Funktionen wieder zurückgesetzt werden, wenn Zugbetrieb (wie oben beschrieben) erkannt wird.

In weiterer Ausgestaltung der Erfindung kann eine Unterbindung einer Hochschaltung nur dann zugelassen werden, wenn

- der Querbeschleunigungs Signalwert (aq(t)) größer als ein zweiter Querbeschleunigungs-Grenzwert (aqg2) und
- die zeitliche Änderung des Drosselklappen-Signalwerts (dalpha(t)/dt) größer als ein vierter Drosselklappengeschwindigkeits-Grenzwert (alphag4) und

- der Drosselklappen- Signalwert (alpha(t)) kleiner als ein bestimmter Prozentwert der motordrehzahlabhängigen Grenzkennlinie (azsg-(nmot)) nach Fig. 13 ist.

Hiermit wird insbesondere verhindert, daß das Fahrzeug bei plötzlichem Lastwechsel bei Kurvenfahrt eindrehen kann.

Die in den Figuren und der Beschreibung angegebenen Werte für verwendete Parameter können selbstverständlich nur Richtwerte sein. Das Verfahren selbst kann sowohl mit einer diskret aufgebauten Steuerung, als auch mittels eines Mikrorechners realisiert werden. Bei einer diskret aufgebauten Steuerung sind hierbei die einzelnen Verfahrensschritte bzw. die in den Blockschaltbildern gezeigten Elemente als Module aufzubauen, während sie in einer Mikrorechnerlösung in Form von Programmen oder Programmteilen zu realisieren sind; die in der Fig. 2 gezeigte parallele Bestimmung der primären Kenngrößen SKP1, SKP2, . . . , SKP5 hat dann selbstverständlich sequentiell zu erfolgen.

## Patentansprüche

1. Verfahren zur Steuerung eines selbsttätig schaltenden Ge triebes (2) eines mit einer Brennkraftmaschine ausgerüste ten Kraftfahrzeugs, wobei
   - die Brennkraftmaschine mittels eines Leistungssteuerorgans beeinflußbar ist,
   - Gangstufen (g) des Getriebes (2) über Schaltprogramme (SKFj) wenigstens abhängig von der Stellung des Leistungssteuerorgans und von der Motordrehzahl oder der Fahrgeschwindigkeit automatisch geschaltet werden,
   - ein der Stellung des Leistungssteuerorgans proportionales Signal (alpha) zyklisch oder antizyklisch abgetastet wird,
   - der abgetastete Signalwert (alpha(t)) der Stellung des Leistungssteuerorgans zur Gewinnung einer Umschaltstrategie zwischen Fahrprogrammen herangezogen wird, indem

     a) neben dem abgetasteten Signalwert (alpha(t)) für das Leistungssteuerorgan noch wenigstens ein weiterer Signalwert eines Betriebs- oder Fahrparameters des Kraftfahrzeugs zyklisch oder antizyklisch ermittelt wird und

     b) die abgetasteten Signalwerte durch Verknüpfung mit zumindest je einem weiteren Betriebs- oder Fahrparameter (21,22,23,24,25) des Kraftfahrzeugs in Werte primärer Kenngrößen (SKP1(t), SKP2(t), SKP3(t), SKP4(t), SKP5(t)) gewandelt werden,

     c) aus denen mittels einer Verknüpfungsfunktion (26) ein Wert einer sekundären Kenngröße (SKS(t)) gewonnen und ein Wert einer ersten Fahraktivität (SK1(t)) als gewichtete Summe (SK1(t) = SK1'(t) = (1/A) x (B x SKS(t) + (A-B) x SK1(t-T1)-)) aus der neu gewonnenen sekundären Kenngröße und einem Wert der einen ersten Berechnungszeitraum (T1) vorher ermittelten und abgespeicherten ersten Fahraktivität (SK1(t-T1)) bestimmt und zur Auswahl eines Schaltprogramms (SKFj, j = 1, 2 ... 5) bzw. zur gezielten Veränderung von Schaltentscheidungen herangezogen wird

     oder

     aus denen mittels einer Verknüpfungsfunktion (26) ein Wert einer sekundären Kenngröße (SKS(t)) gewonnen und abgespeichert, und mit jedem neu gewonnenen Wert der sekundären Kenngröße eine Anzahl (m + 1) bereits vorher gewonnener und abgespeicherter Werte der sekundären Kenngröße aktualisiert werden, wobei aus (m + 1) abgespeicherten Werten der sekundären Kenngröße (SKS(t-iDT), i = 0, 1, 2 ... m) durch Gewichtung und Summenbildung eine erste Fahraktivität (SK1(t) = SK1'(t) = (1/ΣAi) x Σ(Ai x SKS(t-iDT)), i = 0,1...m) bestimmt und zur Auswahl eines Schaltprogramms (SKFj, j = 1, 2 ... 5) bzw. zur gezielten Veränderung von Schaltentscheidungen herangezogen wird.

2. Verfahren nach Anspruch 1, **dadurch gekennzeichnet,** daß die Auswahl des Schaltprogramms (SKFj) aus der ersten Fahraktivität (SK1(t)) über ein Kennfeld (28) aus einer Reihe von zwischen einem verbrauchsoptimierten Schaltprogramm (SKF1) und einem leistungsoptimierten Schaltprogramm (SKF5) liegenden und diese umfassenden Anzahl von Schaltprogrammen erfolgt, wobei mit wachsenden Werten der Fahraktivität (SK(t), SK1(t)) mehr leistungsoptimierte Schaltprogramme ausgewählt werden.

3. Verfahren nach Anspruch 2, **dadurch gekennzeichnet**, daß das Kennfeld (28) hysteresebehaftet ist.

4. Verfahren nach wenigstens einem der vorangehenden Ansprüche, **dadurch gekennzeichnet**, daß die Verknüpfungsfunktion (26) eine Maximalwertauswahl aus den primären Kenngrößen (SKP1(t), SKP2(t), SKP3(t), SKP4(t), SKP5(t)) ist.

**5.** Verfahren nach wenigstens einem der vorangehenden Ansprüche, **dadurch gekennzeichnet**, daß die erste Verknüpfung (21) über eine ansteigende Kurve (f(alpha(t))) wachsenden Werten der Stellung des Leistungssteuerorgans (alpha(t)) größere Werte der ersten primären Kenngröße (SKP1(t)) zuweist.

**6.** Verfahren nach Anspruch 5, **dadurch gekennzeichnet**, daß der Anstieg der Kurve (f(alpha(t))) von der zeitlichen Änderung des Fahrgeschwindigkeits-Signalwerts (dv(t)/dt) abhängig ist und mit wachsender zeitlicher Änderung der Fahrgeschwindigkeits-Signalwerte (dv(t)/v(t)) zunimmt, oder Werte der Kurve (f(alpha(t))) mit einem progressiv mit der zeitlichen Änderung der Fahrgeschwindigkeits-Signalwerte (dv(t)/dt) anwachsenden Gewichtungsfaktor gewichtet werden.

**7.** Verfahren nach wenigstens einem der vorangehenden Ansprüche, **dadurch gekennzeichnet**, daß die zweite Verknüpfung (SKP2 = f(nmot(t), g)) (22) über eine ansteigende Kurve (f(nmot(t))) wachsenden Werten des Motordrehzahl-Signalwerts (nmot(t)) größere Werte der zweiten primären Kenngröße (SKP2(t)) zuweist.

**8.** Verfahren nach Anspruch 7, **dadurch gekennzeichnet**, daß der Anstieg der Kurve (f(nmot(t)) gangstufenabhängig ist und mit wachsender Gangstufe (g) abnimmt.

**9.** Verfahren nach wenigstens einem der vorangehenden Ansprüche, **dadurch gekennzeichnet**, daß die dritte Verknüpfung (SKP3 = f(aq(t), v(t))) (23) über eine ansteigende Kurve (f(aq(t))) wachsenden Werten des Querbeschleunigungs-Signalwerts (aq(t)) größere Werte der dritten primären Kenngröße (SKP3(t)) zuweist.

**10.** Verfahren nach Anspruch 9, **dadurch gekennzeichnet**, daß der Anstieg der Kurve (f(aq(t))) geschwindigkeitsabhängig ist und mit wachsenden Fahrgeschwindigkeits-Signalwerten (v(t)) zunimmt.

**11.** Verfahren nach wenigstens einem der vorangehenden Ansprüche, **dadurch gekennzeichnet**, daß die vierte Verknüpfung (SKP4 = f(alb(t), v(t))) (24) Längsbeschleunigungs-Signalwerten (alb(t)) über eine ansteigende Kurve (f(alb(t))) wachsenden Werten des Längsbeschleunigungs-Signalwerts (alb(t)) größere Werte der vierten primären Kenngröße (SKP4(t)) zuweist.

**12.** Verfahren nach Anspruch 11, **dadurch gekennzeichnet**, daß die Steigung der ansteigenden Kurve (f(alb(t))) geschwindigkeitsabhängig ist und mit wachsenden Fahrgeschwindigkeits-Signalwerten (v(t)) zunimmt.

**13.** Verfahren nach wenigstens einem der vorangehenden Ansprüche, **dadurch gekennzeichnet**, daß die fünfte Verknüpfung (SKP5 = f(alv(t), v(t))) (25) über eine ansteigende Kurve (f(alv(t))) wachsenden Werten des Längsverzögerungs-Signalwerts (alv(t)) größere Werte der fünften primären Kenngröße (SKP5(t)) zuweist.

**14.** Verfahren nach Anspruch 13, **dadurch gekennzeichnet**, daß die Steigung der ansteigenden Kurve (f(alv(t))) geschwindigkeitsabhängig ist und mit wachsenden Fahrgeschwindigkeits-Signalwerten (v(t)) zunimmt.

**15.** Verfahren nach wenigstens einem der vorangehenden Ansprüche, **dadurch gekennzeichnet**, daß die Auswahl des Schaltprogramms (SKFj) über das Kennfeld (28) aus einer aus der ersten Fahraktivität (SK1(t)) und einer zweiten Fahraktivität SK2(t) zusammengesetzten Gesamtfahraktivität erfolgt (SK(t) = (A1*SK1(t) + A2* SK2(t)/(A1 + A2)).

**16.** Verfahren nach Anspruch 15, **dadurch gekennzeichnet**, daß die zweite Fahraktivität (SK2(t)) aus einer gewichteten Summe (SK2(t)= (1/A)* (B*SKZ(t) + (A-B)*SK2(t-T1))) aus einer neu gewonnenen Zwischengröße (SKZ(t)) und einem Wert der einen ersten Berechnungszeitraum (T1) vorher ermittelten und abgespeicherten zweiten Fahraktivität (SK2(t-T1)) bestimmt wird.

**17.** Verfahren nach Anspruch 16, **dadurch gekennzeichnet**, daß die Zwischengröße aus der gewichteten Summe (SKZ(t) = (alb(t)/albmax(g) + alv(t)/alvmax(g) + aq(t)/aqmax)/3) eines Quotienten aus einem Längsbeschleunigungs-Signalwert (alb(t)) und einer gangabhängig maximalen Fahrzeugbeschleunigung (albmax(g)), eines Quotienten aus einem Längsverzögerungs-Signalwert (alv(t)) und einer gangabhängig maximalen Fahrzeugverzögerung (alvmax(g)), und dem durch eine maximale Fahrzeugquerbeschleunigung (aqmax) geteilten Querbeschleunigungs-Signalwert (aq(t)) ermittelt wird.

**18.** Verfahren nach wenigstens einem der Ansprüche 1 oder 16, **dadurch gekennzeichnet**, daß bei einer ersten Bestimmung der Werte der ersten und zweiten Fahraktivität (SK1(t), SK2-

(t)) die Werte (SK1(t-T1), SK2(t-T1)) auf einen Anfangswert gesetzt werden können.

**19.** Verfahren nach wenigstens einem der vorangehenden Ansprüche, dadurch gekennzeichnet, daß das leistungsoptimierte Schaltprogramm (SKF5) angewählt wird, sofern die zeitliche Änderung der Stellung des Leistungssteuerorgans (dalpha(t)/dt) größer als ein zweiter Grenzwert (alphag1) ist und zum vorher angewählten Schaltprogramm zurückgekehrt wird, wenn die Stellung des Leistungssteuerorgans (alpha(t)) um einen festgesetzten der mit der Fahraktivität (SK(t), SK1(t), SK2(t)) veränderlichen Wert (afg) und einen festgelegten Teil (fak) der erreichten maximalen Stellung des Leistungssteuerorgans zurückgenommen wird.

**20.** Verfahren nach wenigstens einem der vorangehenden Ansprüche 1 bis 18, **dadurch gekennzeichnet**, daß, sofern eine Änderungsgeschwindigkeit (dalpha/dt) der Stellung des Leistungssteuerorgans (alpha (t)) den festgelegten oder mit der Fahraktivität (SK(t), SK1(t), SK2(t)) veränderlichen ersten Grenzwert (alphag1) überschreitet, wenigstens ein nächsthöheres mehr leistungsoptimiertes Schaltprogramm (SKFj(t) = SKF(j + 1)(t-T1)) zumindest solange angewählt wird, bis das leistungsoptimierte Schaltprogramm (SKF5) erreicht ist.

**21.** Verfahren nach wenigstens einem der vorangehenden Ansprüche, **dadurch gekennzeichnet**, daß eine Wandlerüberbrückungskupplung eines mit einem Drehmomentwandler ausgestatteten Getriebes mit steigenden Werten der Fahraktivität (SK(t), SK1(t), SK2(t)) nach Schaltvorgängen später geschlossen bzw. vor Schaltvorgängen früher geöffnet bzw. erst bei höheren Motordrehzahl-Signalwerten geschlossen gehalten wird.

**22.** Verfahren nach wenigstens einem der vorangehenden Ansprüche, dadurch gekennzeichnet, daß bei maximaler Stellung des Leistungssteuerorgans (alpha = alphamax) ein Kick-Down-Schaltprogramm (SKFKD) angewählt und so lange aktiviert bleibt, bis der Signalwert (alpha(t)) einen festgelegten oder mit der Fahraktivität (SK(t), SK1(t)1 SK2(t)) veränderlichen zweiten Grenzwert (alphag2) unterschreitet.

**23.** Verfahren nach wenigstens einem der vorangehenden Ansprüche, **dadurch gekennzeichnet**, daß eine Hochschaltung unter Schub um einen zweiten Zeitraum (T2) verzögert wird, sofern eine Änderungsgeschwindigkeit (dalpha/dt) der Stellung des Leistungssteuerorgans (alpha(t)) einen dritten Grenzwert (alphag3) unterschreitet, wobei der zweite Zeitraum (T2) von der Fahraktivität (SK(t), SK1(t), SK2(t)) abhängt.

**24.** Verfahren nach Anspruch 23, **dadurch gekennzeichnet**, daß der zweite Zeitraum (T2) bei einem Bremsvorgang des Kraftfahrzeugs zu Null gesetzt wird und nach Beendigung des Bremsvorgangs eine Hochschaltung unter Schub um einen dritten, von der Fahraktivität (SK(t), SK1(t), SK2(t)) abhängenden Zeitraum (T3) verzögert wird.

**25.** Verfahren nach wenigstens einem der vorangehenden Ansprüche, **dadurch gekennzeichnet**, daß ein Gangstufenwechsel vermieden wird und/ oder die Zeiträume (T2, T3) zu Null gesetzt werden, sofern der Betrag des Querbeschleunigungs-Signalwerts (|aq|) eine von der Fahrgeschwindigkeit (v(t)) abhängige und/oder mit der Fahraktivität (SK(t), SK1(t), SK2(t)) veränderliche Grenzlinie (aqg = f(v(t))) überschreitet, bzw. solange nach Unterschreiten der Grenzlinie (aqg = f(v(t))) ein festgelegter oder mit der Fahraktivität (SK(t), SK1(t), SK2(t)) veränderlicher vierter Zeitraum (T4) noch nicht verstrichen ist.

**26.** Verfahren nach Anspruch 22, 23 oder 24, dadurch gekennzeichnet, daß nach Ablauf der Zeiträume (T2, T3, T4) eine Hochschaltung erst wieder im Zugbetrieb und nach Ablauf eines von der Fahraktivität (SK(t), SK1(t), SK2-(t)) abhängigen fünften Zeitraums (T5) zugelassen wird.

**27.** Verfahren nach wenigstens einem der vorangehenden Ansprüche, **dadurch gekennzeichnet**, daß Zugbetrieb erkannt wird, wenn die Stellung des Leistungssteuerorgans (alpha(t)) größer als eine motordrehzahlabhängige Grenzkennlinie (azsg(nmot)) ist (alpha(t) > azsg(nmot)) und die zeitliche Änderung des Fahrgeschwindigkeits-Signalwerts (dv(t)/dt) nach der Zeit positive Werte annimmt.

**28.** Verfahren nach Anspruch 27, dadurch gekennzeichnet, daß eine Unterbindung einer Hochschaltung nur dann zugelassen wird, wenn eine Differenzgeschwindigkeit (Dv = vref-v, Dv(t)-= vref(t)-v(t)) zwischen einer Geschwindigkeit (vref, vref(t)) einer nicht angetriebenen Achse und der an einer angetriebenen Achse erfaßten Fahrgeschwindigkeit (v, v(t)) einen zulässigen Differenzgeschwindigkeitswert (Dvzul) nicht überschreitet (Dv(t)<Dvzul).

**29.** Verfahren nach Anspruch 28, dadurch gekennzeichnet, daß bei Überschreiten des zulässigen Differenzgeschwindigkeitswerts
- eine Wandlerüberbrückungskupplung eines mit einem Drehmomentwandler ausgestatteten Getriebes geöffnet,
- eine Haltezeit (T6) gesetzt wird, während der eine Hochschaltung nicht unterbunden werden kann,
- die eingelegte Gangstufe (g) um eins erhöht wird und
- Rückschaltungen verhindert werden,

wobei diese Funktionen wieder zurückgesetzt werden, wenn Zugbetrieb erkannt wird und positive Werte der Änderung des Fahrgeschwindigkeits-Signalwerts (v(t)) vorliegen.

**30.** Verfahren nach wenigstens einem der vorangehenden Ansprüche, dadurch gekennzeichnet, daß eine Unterbindung einer Hochschaltung nur dann zugelassen wird, wenn
- der Querbeschleunigungs-Signalwert (aq(t)) größer als ein zweiter Querbeschleunigungs-Grenzwert (aqg2) und
- die zeitliche Änderung der Stellung des Leistungssteuerorgans (dalpha(t)/dt) größer als ein vierter Grenzwert (alphag4) und
- der Signalwert (alpha(t)) der Stellung des Leistungssteuerorgans kleiner als ein bestimmter Prozentwert der motordrehzahlabhängigen Grenzkennlinie (azsg(nmot)) ist.

**31.** Vorrichtung zur Durchführung des Verfahrens nach wenigstens einem der vorangehenden Ansprüche, wobei eine elektro-hydraulische Getriebesteuerung (1) vorzugsweise mit einem Mikrorechner ausgestattet ist, welcher Signale (nmot(t), alpha(t)) von wenigstens einem Motordrehzahlsensor (7) und einem Drosselklappensensor (6) erfaßt und über diese Signale mittels Schaltprogrammmodulen elektro-hydraulische Gangstufenwechselventile (9 - 13) ansteuernde Gangstufenwechselsignale (ds, wk, sI/II, SII/III/IV) erzeugt, **dadurch gekennzeichnet**,

daß an die Getriebesteuerung (1) ferner ein Fahrgeschwindigkeitssensor (8), ein Querbeschleunigungssensor (14) und ein Längsbeschleunigungssensor (19, 20) angeschlossen sind und die Eingangssignale mittels vorzugsweise digitaler Filter (16 - 20) mit Tiefpaßcharakteristik gefiltert und über Kennfeld-Module (21 - 25) in Werte primärer Kenngrößen (SKP1(t), SKP2(t), SKP3(t), SKP4(t), SKP5(t)) gewandelt werden, aus denen ein Verknüpfungsfunktions-Modul (26) eine sekundäre Kenngröße (SKS(t)) ermittelt, wobei ein Digitalfilter (27) mit Tiefpaßcharakteristik (PT1- Verhalten) die sekundäre Kenngröße (SKS(t)) in eine Fahraktivität (SK1(t)) wandelt, aus der über ein weiteres Kennfeld-Modul (28) ein Schaltprogramm ausgewählt wird.

**Claims**

**1.** Method for controlling an automatically shifting transmission (2) of a motor vehicle equipped with an internal combustion engine,
- the internal combustion engine being influenceable by means of a power control element (1),
- gear stages (g) of the transmission (2) being automatically shifted by way of gearshift programs (SKFj) at least as a function of the position of the power control element and of the engine speed or the vehicle speed,
- a signal (alpha) proportional to the position of the power control element being cyclically or anti-cyclically scanned,
- the scanned signal value (alpha (t)) of the position of the power control element being used to obtain a shifting strategy between drive programs, in which

  a) in addition to the scanned signal value (alpha(t)) of the power control element at least one further signal value of an operating or drive parameter of the motor vehicle is also determined cyclically or anti-cyclically and

  b) the scanned signal values are converted by linking each with at least one further operating or drive parameter (21, 22, 23, 24, 25) of the motor vehicle into values of primary characteristic variables (SKP1(t), SKP2(t), SKP3(t), SKP4(t), SKP5(t)),

  c) from which, by means of a logic function (26), a value of a secondary characteristic variable (SKS(t)) is obtained and a value of a first drive activity (SK1(t)) is determined as the weighted sum (SK1(t) = SK1'(t) = (1/A) x (B x SKS(t)+(A-B) x SK1(t-T1))) of the newly obtained secondary characteristic variable and a value of the first drive activity (SK1(t-T1)), previously calculated and stored in a first calculation period, (T1) and is used to select a gearshift program (SKFj, j=1, 2...5) or for purposely varying gearshift decisions

  or

  from which, by means of a logic function (26), a value or a secondary characteristic variable (SKS(t)) is obtained and stored, and a number (m + 1) of already previously obtained and stored values of the secondary characteristic variable are updated with each newly obtained value of the secondary characteristic variable, a first drive activity (SK1(t) = SK1'(t) = (1/ΣAi) x Σ(Ai x SKS(t-iDT)), i = 0,1...m) being determined from (m + 1) stored values of the secondary characteristic variable (SKS(t-iDT), i = 0, 1, 2...m) by weighting and summation and used to select a gearshift program (SKFj j = 1, 2...5) or for purposely varying gearshift decisions.

**2.** Method as claimed in claim 1, characterised in that the gearshift program (SKFj) is selected from the first drive activity (SK1(t)) by way of a map (28) from a range of gearshift programs lying between a gearshift program (SKF1) designed for optimum consumption and a gearshift program (SKF5) designed for optimum power and including these, gearshift programs designed more for optimum power being selected with increasing values of the drive activity (SK(t), SK1(t)).

**3.** Method as claimed in claim 2, characterised in that the map (28) is subject to hysteresis.

**4.** Method as claimed in at least one of the preceding claims, characterised in that the logic function (26) is a maximum value selection from the primary characteristic variables (SKP1(t), SKP2(t), SKP3(t), SKP4(t), SKP5(t)).

**5.** Method as claimed in at least one of the preceding claims, characterised in that the first linkage (21) assigns larger values of the first primary characteristic variable (SKP1(t)) to values of the position of the power control element (alpha(t)) increasing over a rising curve (f(alpha(t))).

**6.** Method as claimed in claim 5, characterised in that the rise of the curve (f(alpha(t))) varies as a function of the rate of change of the vehicle speed signal value (dv(t)/dt) and increases with a growing rate of change of the vehicle speed signal values (dv(t)/v(t)), or values of the curve (f(alpha(t))) are weighted with a weighting factor which increases progressively with the rate of change of the vehicle speed Signal values (dv(t)/dt).

**7.** Method as claimed in at least one of the preceding claims characterised in that the second linkage (SKP2 = f(nmot(t), g)) (22) assigns larger values of the second primary characteristic variable (SKP2(t)) to values of the engine speed signal value (nmot(t)) increasing over a rising curve (f(nmot(t))).

**8.** Method as claimed in claim 7, characterised in that the rise of the curve (f(nmot(t)) is a function of the gear stage and decreases with increasing gear stage (g).

**9.** Method as claimed in at least one of the preceding claims, characterised in that the third linkage (SKP3 = f(aq(t), v(t))) (23) assigns larger values of the third primary characteristic variable (SKP3(t)) to values of the lateral acceleration signal value (aq(t)) increasing over a rising curve (f(aq(t))).

**10.** Method as claimed in claim 9, characterised in that the rise of the curve (f(aq(t))) is a function of the vehicle speed and increases with increasing vehicle speed signal values (v(t)).

**11.** Method as claimed in at least one of the preceding claims, characterised in that the fourth linkage (SKP4 = f(alb(t), v(t))) (24) assigns larger values of the fourth primary characteristic variable (SKP4(t)) to values of the longitudinal acceleration signal value (alb(t)) increasing over a rising curve (f(alb(t))).

**12.** Method as claimed in claim 11, characterised in that the gradient of the rising curve (f(alb(t))) is a function of the vehicle speed and increases with increasing vehicle speed signal values (v(t)).

**13.** Method as claimed in at least one of the preceding claims, characterised in that the fifth linkage (SKP5 = f(alv(t), v(t))) (25) assigns larger values of the fifth primary characteristic variable (SKP5(t)) to values of the longitudinal deceleration signal value (alv(t)) increasing over a rising curve (f(alv(t))).

**14.** Method as claimed in claim 13, characterised in that the gradient of the rising curve (f(alv(t))) is a function of the vehicle speed and increases with increasing vehicle speed signal values (v(t)).

**15.** Method as claimed in at least one of the preceding claims, characterised in that the gearshift program (SKFj) is selected by way of the map (28) from a total drive activity (SK(t) = -(A1*SK1(t) + A2* SK2(t)/(A1 + A2)) composed of the first drive activity (SK1(t)) and a second drive activity SK2(t).

**16.** Method as claimed in claim 15, characterised in that the second drive activity (SK2(t)) is determined from a weighted sum (SK2(t) = (1/A)* (B*SKZ(t) + (A-B)*SK2(t-T1))) of a newly obtained intermediate variable (SKZ(t)) and a value of a second drive activity (SK2(t-T1)) determined a first calculation period (T1) previously and stored.

**17.** Method as claimed in claim 16, characterised in that the intermediate variable is determined from the weighted sum (SKZ(t) = (alb(t)-/albmax (alv(t)/alvmax(g) + aq(t)/aqmax)/3) of a quotient of a longitudinal acceleration signal value (alb(t)) and a gear-dependent maximum vehicle acceleration (albmax (g)), a quotient of a longitudinal deceleration signal value (alv(t)) and a gear-dependent maximum vehicle deceleration (alvmax(g)), and the lateral acceleration signal value (aq(t)) divided by a maximum vehicle lateral acceleration (aqmax).

**18.** Method as claimed in at least one of claims 1 or 16, characterised in that in a first calculation of the values of the first and second drive activity (SK1(t), SK2(t)) the values (SK1(t-T1), SK2(t-T1)) can be set to an initial value.

**19.** Method as claimed in at least one of the preceding claims, characterised in that the gearshift program (SKF5) designed for optimum power is selected provided that the rate of change of the position of the power control element (dalpha(t)/dt) is greater than a second limit (alphag1) and reverts to the gearshift program previously selected if the position of the power control element (alpha(t)) is retracted by a value (afg), fixed or variable with the drive activity (SK(t), SK1(t), SK2(t)), and a fixed portion (fak) of the maximum position of the power control element attained.

**20.** Method as claimed in at least one of the preceding claims 1 to 18, characterised in that, provided a rate of change (dalpha/dt) of the position of the power control element (alpha(t)) does not exceed the first limit (alphag1), fixed or variable with the drive activity (SK(t), SK1(t), SK2(t)), at least a next highest gearshift program (SKFj(t) = SKF(j + 1)(t-T1)) designed more for optimum power is selected, at least until the gearshift program (SKF5) designed for optimum power is attained.

**21.** Method as claimed in at least one of the preceding claims, characterised in that, with rising values of the drive activity (SK(t), SK1(t), SK2-(t)), a converter lockup clutch of a transmission equipped with a torque converter is closed later after gearshift sequences or opened earlier before gearshift sequences or only kept closed in the event of higher engine speed signal values.

**22.** Method as claimed in at least one of the preceding claims, characterised in that at the maximum position of the power control element (alpha = alphamax) a kick-down shift program (SKFKD) is selected and remains activated until the signal value (alpha(t)) falls below a second limit (alphag2), fixed or variable with the drive activity (SK(t), SK1(t)1, SK2(t)).

**23.** Method as claimed in at least one of the preceding claims, characterised in that an upward shift in overrun conditions is delayed by a second period (T2), provided that a rate of change (dalpha/dt) of the position of the power control element (alpha(t)) is below a third limit (alphag3), the second period (T2) varying as a function of the drive activity (SK(t), SK1(t), SK2(t)).

**24.** Method as claimed in claim 23, characterised in that the second period (T2) is set to zero in a braking sequence of the motor vehicle and on termination of the braking sequence an upward shift in overrun conditions is delayed by a third period (T3) varying as a function of the drive activity (SK(t), SK1(t), SK2(t)).

**25.** Method as claimed in at least one of the preceding claims, characterised in that a gear stage change is avoided and/or the periods (T2, T3) set to zero provided that the amount of the lateral acceleration signal value (/aq/) exceeds a limit (aqg = f(v(t))), varying as a function of the vehicle speed (v(t)) and/or variable with the drive activity (SK(t), SK1(t), SK2-(t)) or as long as a fourth period (T4), fixed or variable with the drive activity (SK(t), SK1(t), SK2(t)) has not yet elapsed after falling below the limit (aqg = f(v(t))).

**26.** Method as claimed in claim 22, 23 or 24, characterised in that after the periods (T2, T3, T4) have elapsed an upward shift is permitted again only in tractive conditions and once a fifth period (T5), varying as a function of the drive activity (SK(t), SK1(t), SK2(t)) has elapsed.

**27.** Method as claimed in at least one of the preceding claims, characterised in that tractive conditions are detected when the position of the power control element (alpha(t)) is greater than a limit characteristic curve (azsg(nmot)), varying as a function of an engine speed (alpha(t)>azsg(nmot)) and the rate of change of the vehicle speed signal value (dv(t)/dt) assumes positive values after that time.

**28.** Method as claimed in claim 27, characterised in that prevention of an upward shift is permitted only if a speed differential (Dv = vref-v, Dv(t) = vref(t)-v(t)) between a speed (vref, vref(t)) of an undriven axle and the vehicle speed (v, v(t)) detected on a driven axle does not exceed an admissible speed differential value (Dvzul) (Dv(t)<Dvzul).

**29.** Method as claimed in claim 28, characterised in that if the admissible speed differential value is exceeded
- a converter lockup clutch of a transmission equipped with a torque converter can be opened,
- a hold time (T6) is set, during which an upward shift cannot be prevented,
- the gear stage (g) engaged is increased by one and
- downward gearshifts are prevented,

the said functions being reversed when tractive conditions are detected and the values for the variation of the vehicle speed signal value (v(t)) are positive.

**30.** Method as claimed in at least one of the preceding claims, characterised in that prevention of an upward shift is permitted only when
- the lateral acceleration signal value (aq(t)) is greater than a second lateral acceleration limit (aqg2) and
- the rate of change of the position of the power control element (dalpha(t)/dt) is greater than a fourth limit (alphag4) and
- the signal value (alpha(t)) of the position of the power control element is less than a certain percentage of the limit characteristic curve (azsg(nmot)) varying as a function of the engine speed.

**31.** Device for performing the method as claimed in at least one of the preceding claims, an electro-hydraulic transmission control (1) preferably being equipped with a microcomputer, which detects signals (nmot(t), alpha(t)) from at least one engine speed sensor (7) and a throttle valve sensor (6) and by way of the said signals generates gear stage change signals (ds, wk, sI/II, SII/III/IV) actuating electro-hydraulic gear stage change valves (9-13) by means of gearshift program modules, characterised in that a vehicle speed sensor (8), a lateral acceleration sensor (14) and a longitudinal acceleration sensor (19, 20) are also connected to the transmission control (1) and the input signals are filtered, by means of preferably digital filters (16-20) with lowpass characteristic and are converted by means of characteristic map modules (21-25) into values of primary characteristic variables (SKP1(t), SKP2(t), SKP3(t), SKP4(t), SKP5(t)), from which a logic function module (26) determines a secondary characteristic variable (SKS(t)), a digital filter (27) with lowpass characteristic (PT1-response) converting the secondary characteristic variable (SKS(t)) into a drive activity (SK1(t)), from which a gearshift program is selected by way of a further characteristic map module (28).

## Revendications

**1.** Procédé pour commander la transmission (2) à commande automatique d'un véhicule équipé d'un moteur à combustion interne, dans lequel :
- le moteur à combustion interne peut être influencé par un organe de commande de puissance,
- les rapports (g) de la transmission (2) sont commandés automatiquement par l'intermédiaire de programmes de commande (SKFj) au moins en fonction de la position de l'organe de commande de puissance et de la vitesse de rotation du moteur ou de la vitesse de marche,
- un signal (alpha) proportionnel à la position de l'organe de commande de puissance est détecté de manière cyclique ou non,
- la valeur détectée du signal (alpha(t)) de la position de l'organe de commande de puissance est utilisée pour obtenir un programme de commutation entre les programmes de marche, par le fait que

  a) outre la valeur du signal détectée (alpha(t)) pour l'organe de commande de puissance, on détermine, de manière cyclique ou non, encore au moins une autre valeur de signal d'un paramètre de fonctionnement ou de marche du véhicule et

  b) les valeurs de signal détectées sont converties par une relation avec au moins respectivement un autre paramètre de fonctionnement ou de marche (21, 22, 23, 24, 25) de véhicule en valeurs de grandeurs caractéristiques primaires (SKP1(t), SKP2(t), SKP3(t), SKP4(t), SKP5(t)).

c) à partir de celles-ci, on détermine au moyen d'une fonction logique (26) une valeur d'une grandeur caractéristique secondaire (SKS(t)) et on détermine une valeur d'une première activité de marche (SK1(t)) en tant que somme pondérée

(SK1(t) = SK1'(t) = (1/A) x (B x SKS(t) + (A-B) x SK1(t-T1)))

constituée par la grandeur caractéristique secondaire nouvellement obtenue et par une valeur de la première activité de marche (SK1(t-T1)) obtenue précédemment pendant un premier laps de temps de calcul (A1) et enregistrée, et on les utilise pour sélectionner un programme de commande (SKFj, j = 1, 2...5) et/ou pour modifier de façon adéquate les décisions de commande, ou bien à partir de ces valeurs on obtient au moyen d'une fonction logique (26) une valeur d'une grandeur caractéristique secondaire (SKS(t)) qu'on enregistre, et avec chaque valeur nouvellement obtenue de la grandeur caractéristique secondaire, on actualise un nombre (m + 1) de valeurs de la grandeur caractéristique secondaire précédemment obtenues et enregistrées, une première activité de marche (SK1(t)- = SK1'(t) = (1/Ai) x (Ai x SKS(t-iDT)), i = 0,1...m) étant déterminée à partir des valeurs enregistrées de la grandeur caractéristique secondaire (SKS(t-iDT), i = 0, 1, 2...m) par pondération et totalisation et étant utilisée pour sélectionner un programme de commande (SKFj, j = 1, 2...5) et/ou pour modifier de façon adéquate des décisions de commande.

**2.** Procédé selon la revendication 1, caractérisé en ce que la sélection du programme de commande (SKFj) s'effectue à partir de la première activité de marche (SK1(t)) par l'intermédiaire d'un réseau de caractéristiques (28) constitué par une série de programmes de commande située entre un programme de commande de puissance optimisée (SKF5) et un programme de commande de consommation optimisée (SKF1) et comprenant ceux-ci, de plus en plus de programmes de commande de puissance optimisée étant sélectionnés au fur et à mesure qu'augmentent les valeurs de l'activité de marche (SK(t), SK1(t)).

**3.** Procédé selon la revendication 1, caractérisé en ce que le réseau de caractéristiques (28) présente de l'hystérésis.

**4.** Procédé selon l'une au moins des revendications précédentes, caractérisé en ce que la fonction logique (26) est une sélection de valeurs maximales à partir des grandeurs caractéristiques primaires (SKP1(t), SKP2(t), SKP3-(t), SKP4(t), SKP5(t).

**5.** Procédé selon l'une au moins des revendications précédentes, caractérisé en ce que la première relation (21) attribue par l'intermédiaire d'une courbe ascendante (f(alpha(t))), aux valeurs croissantes de la position de l'organe de commande de puissance (alpha(t)) des valeurs croissantes de la première grandeur caractéristique primaire (SKP1(t)).

**6.** Procédé selon la revendication 5, caractérisé en ce que la pente de la courbe (f(alpha(t))) est fonction de la variation dans le temps de la valeur du signal de vitesse de marche (dv(t)/dt) et augmente au fur et à mesure qu'augmente la variation dans le temps des valeurs du signal de vitesse de marche (dv(t)/v(t)), ou bien des valeurs de la courbe (f(alpha(t))) sont pondérées avec un facteur de pondération qui croît progressivement avec la variation dans le temps des valeurs du signal de vitesse de marche (dv(t):dt).

**7.** Procédé selon l'une au moins des revendications précédentes, caractérisé en ce que la deuxième fonction logique (SKP2 = f(nmot(t),g)) (22) attribue par l'intermédiaire d'une courbe ascendante (f(nmot(t))), à des valeurs croissantes de la valeur du signal de vitesse de rotation du moteur (nmot(t)) des valeurs croissantes de la deuxième grandeur caractéristique primaire (SKP2(t)).

**8.** Procédé selon la revendication 7, caractérisé en ce que la pente de la courbe (f(nmot)(t) dépend des rapports et décroît quand le rapport (g) monte.

**9.** Procédé selon l'une au moins des revendications précédentes, caractérisé en ce que la troisième fonction logique (SKP3 = f(aq(t),v(t))) (23) attribue par l'intermédiaire d'une courbe ascendante (f(aq(t))) à des valeurs croissantes du signal d'accélération transversale (aq(t)) des valeurs croissantes de la troisième grandeur caractéristique primaire (SKP3(t)).

**10.** Procédé sel on la revendication 4, caractérisé en ce que la pente de la courbe (f(aq(t))) est fonction de la vitesse et augmente au fur et à mesure qu'augmentent les valeurs du signal de vitesse de marche (v(t)).

**11.** Procédé selon l'une au moins des revendications précédentes, caractérisé en ce que la quatrième fonction logique (SKP4 = f(alb(t),v(t))) (24) des valeurs du signal d'accélération longitudinale (alb(t)) attribue par l'intermédiaire d'une courbe ascendante (f(alb(t))) à des valeurs croissantes de la quatrième grandeur caractéristique primaire (SKP4(t)).

**12.** Procédé selon la revendication 11, caractérisé en ce que la pente de la courbe ascendante (f-(alb(t))) est fonction de la vitesse et croît au fur et à mesure qu'augmentent les valeurs du signal de vitesse de marche (v(t)).

**13.** Procédé selon l'une au moins des revendications précédentes, caractérisé en ce que la cinquième fonction logique (SKP5 = f(alv(t), v-(t))) (25) attribue par l'intermédiaire d'une courbe ascendante (f(alv(t))) à des valeurs croissantes du signal de décélération longitudinale (alv(t)) des valeurs croissantes de la cinquième grandeur caractéristique primaire (SKP5(t).

**14.** Procédé selon la revendication 13, caractérisé en ce que la pente de la courbe ascendante (f-(alv(t))) est fonction de la vitesse et augmente au fur et à mesure qu'augmentent les valeurs du signal de vitesse de marche (v(t)).

**15.** Procédé selon l'une au moins des revendications précédentes, caractérisé en ce que la sélection du programme de commande (SKFj) s'effectue par l'intermédiaire du réseau de caractéristiques (28) à partir d'une activité de marche globale (SK(t) = (A1*SK1(t) + A2*SK2-(t)/(A1 + A2)) constituée par la première activité de marche (SK1(t) et une deuxième activité de marche (SK2(t)).

**16.** Procédé selon la revendication 15, caractérisé en ce que la deuxième activité de marche (SK2(t) est déterminée à partir d'une somme pondérée (SK2(t) = (1/A)*(B*SKZ(t) + (A-B)*SK2-(t-T1))) constituée par une grandeur intermédiaire (SKZ(t)) nouvellement obtenue et une valeur de la deuxième activité de marche (SK2(t-T1))) obtenue antérieurement pendant un premier laps de temps de calcul (T1) et enregistrée.

**17.** Procédé selon la revendication 16, caractérisé en ce que la grandeur intermédiaire est déterminée à partir de la somme pondérée (SKZ(t)-= (alb(t)/albmax(g) + alv(t)/alvmax(g) + aq(t)-/aqmax)/3 d'un quotient d'une valeur du signal d'accélération longitudinal e (alb(t)) et d'une accélération maximale du véhicule fonction du rapport (albmax(g)), d'un quotient d'une valeur du signal de décélération longitudinale (alv(t)) et d'une décélération maximale du véhicule fonction du rapport (alvmax(g)), et de la valeur du signal d'accélération transversale (aq(t)) divisée par une accélération transversale maximale du véhicule (aqmax).

**18.** Procédé selon l'une au moins des revendications 1 ou 16, caractérisé en ce qu'avec une première détermination des valeurs de la première et de la deuxième activité de marche (SK1(t), SK2(t)) les valeurs (SK1(t-T1), SK2(t-T1) peuvent être initialisées.

**19.** Procédé selon l'une au moins des revendications précédentes, caractérisé en ce que le programme de commande (SKF5) de puissance optimisée est sélectionné pour autant que la variation dans le temps de la position de l'organe de commande de puissance (dalpha-(t)/dt) est supérieure à une deuxième valeur limite (alphag2) et qu'on revient au programme de commande sélectionné auparavant si la position de l'organe de commande de puissance (alpha(t)) est diminuée d'une valeur fixée (afg) variant avec l'activité de marche (SK(t), SK1(t), SK2(t)) et d'une partie prédéterminée (fak) de la position maximale atteinte de l'organe de commande de puissance.

**20.** Procédé selon l'une au moins des revendications précédentes, caractérisé en ce que, pour autant qu'une vitesse de variation (dalpha/dt) de la position de l'organe de commande de puissance (alpha(t)) dépasse la première valeur limite (alphag1) prédéterminée ou variant avec l'activité de marche (SK(t), SK1(t), SK2(t)-), au moins un programme de commande (SKFj(t) = SKF(J + 1)(t-T1) immédiatement supérieur et plus optimisé en puissance est sélectionné au moins jusqu'à ce que le programme de commande (SKF5) de puissance optimisée soit atteint.

**21.** Procédé selon l'une au moins des revendications précédentes, caractérisé en ce qu'un couplage de pontage de convertisseur d'une transmission équipée d'un convertisseur de couple est fermé plus tard, au fur et à mesure qu'augmentent les valeurs de l'activité de marche (SK(t), SK1(t), SK2(t)), après des opérations de commande, et/ou qu'il est ouvert plus tôt avant des opérations de commande, et/ou qu'il est maintenu fermé seulement aux valeurs plus élevées du signal de vitesse de rotation du moteur.

**22.** Procédé selon l'une au moins des revendications précédentes, caractérisé en ce que, pour une position maximale de l'organe de commande de puissance (alpha = alphamax), un programme de commande kick-down (SKFKD) est sélectionné et reste activé jusqu'à ce que la valeur du signal (alpha(t)) soit passée en dessous d'une deuxième valeur limite (alphag2), prédéterminée ou variant avec l'activité de marche (SK(t), SK1(t), SK2(t)).

**23.** Procédé selon l'une au moins des revendications précédentes, caractérisé en ce qu'une montée de rapport, lors d'une marche sur la lancée est retardée d'un deuxième laps de temps (T2) pour autant qu'une vitesse de variation (dalpha/dt) de la position de l'organe de commande de puissance (alpha(t)) passe en dessous d'une troisième valeur limite (alphag3), le deuxième laps de temps (T2) dépendant de l'activité de marche (SK(t), SK1(t), SK2(t)).

**24.** Procédé selon la revendication 23, caractérisé en ce que le deuxième laps de temps (T2) est annulé en cas de freinage du véhicule, et une fois le freinage terminé, une montée de rapport sur la lancée est ralentie d'un troisième laps de temps (T3) dépendant de l'activité de marche (SK(t), SK1(t), SK2(t)).

**25.** Procédé selon l'une au moins des revendications précédentes, caractérisé en ce qu'un changement de rapport est évité et/ou que les laps de temps (T2,T3) sont annulés pour autant que la valeur du signal d'accélération transversale (|aq|) dépasse une ligne limite (aqg = f(v(t))) dépendant de la vitesse de marche (v(t) et/ou variant avec l'activité de marche (SK(t), SK1(t), SK2(t), et/ou aussi longtemps que, la valeur étant passée en dessous de la ligne limite (aqg = f(v(t))), un quatrième laps de temps (T4) prédéterminé, ou pouvant varier avec l'activité de marche (SK(t), SK1(t), SK2(t)) n'est pas encore écoulé.

**26.** Procédé selon la revendication 22, 23 OU 24, caractérisé en ce qu'après écoulement des laps de temps (T2, T3, T4), une montée de rapport n'est à nouveau permise en traction qu'après écoulement d'un quatrième laps de temps (T5) dépendant de l'activité de marche (SK(t), SK1(t), SK2(t)).

**27.** Procédé selon l'une au moins des revendications précédentes caractérisé en ce que le fonctionnement en traction est identifié lorsque la position de l'organe de commande de puissance (alpha(t)) est supérieure à une ligne caractéristique limite (azsg(nmot)) (alpha(t) > azsg(nmot) et que la variation dans le temps de la valeur du signal de vitesse de marche (dv(t)/dt) prend des valeurs positives après un certain temps.

**28.** Procédé selon la revendication 27, caractérisé en ce qu'un passage à un rapport supérieur n'est empêché que si une vitesse différentielle (Dv = vref-v, Dv(t) = vref(t)-v(t) entre une vitesse (vref, vref(t) d'un essieu non entraîné et la vitesse de marche (v,v(t)) captée sur un essieu entraîné ne dépasse pas une valeur de vitesse différentielle autorisée (Dvzu1) (Dv(t) < Dvzu1).

**29.** Procédé selon la revendication 28, caractérisé en ce que, lors du dépassement de la valeur autorisée de vitesse différentielle

- un couplage de pontage de convertisseur d'une transmission équipée d'un convertisseur de couple est ouvert,
- un temps de maintien (T6) est mis pendant lequel un passage à un rapport supérieur ne peut pas être empêché,
- le rapport (g) qui a été enclenché passe au rapport immédiatement supérieur
- les rétrogradations sont empêchées,

ces fonctions étant remises lorsque le fonctionnement en traction est identifié et qu'on a des valeurs positives de la variation du signal de vitesse de marche (v(t)).

**30.** Procédé selon l'un au moins des revendications précédentes caractérisé en ce que l'empêchement du passage à un rapport supérieur n'est autorisé que si

- la valeur du signal d'accélération transversale (aq(t)) est supérieure à une deuxième valeur limite d'accélération transversale (aqg2) et si
- la variation dans le temps de la position de l'organe de commande de puissante (dalpha(t)/dt) est supérieure à une quatrième valeur limite (alphag4) et si
- la valeur du signal (alpha(t)) de la position de l'organe de commande de puissante est inférieure à un pourcentage déterminé de la ligne caractéristique limite dépendant de la vitesse de rotation du moteur (azsg(nmot)).

**31.** Dispositif pour mettre en oeuvre le procédé selon l'une au moins des revendications précédentes, dans lequel une commande de transmission (1) électro-hydraulique est équipée de préférence d'un microprocesseur qui saisit des signaux (nmot(t), alpha(t)) d'au-moins un capteur de vitesse de rotation du moteur (7) et d'un capteur de papillon des gaz (6) et par l'intermédiaire de ces signaux produit des signaux de changement de rapport (ds, wk, sI/II, SII/III/IV) excitant des életrovannes hydrauliques de changement de rapport (9-13) au moyen de modules de programmes de commande, caractérisé en ce qu'à la commande de transmission (1) sont en outre reliés un capteur de vitesse de marche (8), un capteur d'accélération transversale (14) et un capteur d'accélération longitudinale (19, 20) et les signaux d'entrée sont filtrés au moyen de filtres, de préférence numériques (16-20), ayant une caractéristique passe-bas et transformés par l'intermédiaire de modules de réseaux de caractéristiques (21-25) en valeurs de grandeurs caractéristiques primaires (SKP1(t), SKP2(t), SKP3(t), SKP4(t), SKP5(t), à partir desquelles un module de fonction logique (26) fournit une grandeur caractéristique secondaire (SKS(t), un filtre numérique (27) à caractéristique passe-bas (allure PT1) transformant la grandeur caractéristique (SKS(t)) en une activité de marche (SK1(t)) à partir de laquelle un programme de commande est sélectionné par l'intermédiaire d'un autre module de réseau de caractéristiques (28).

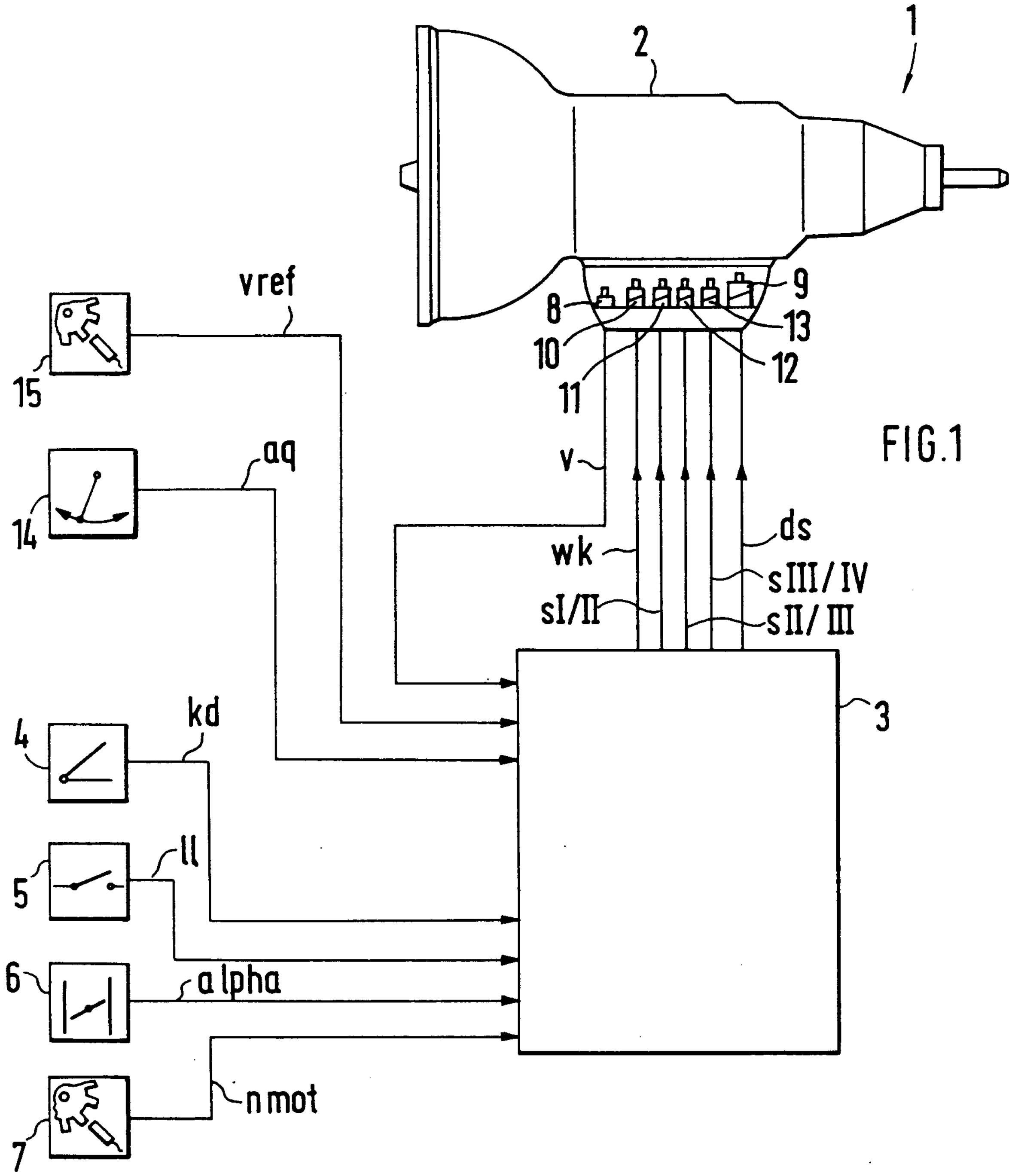
1
2
9
8
13
10
12
11
vref
15
aq
14
v
wk
ds
sIII/IV
sI/II
sII/III
3
4
kd
5
ll
6
alpha
7
nmot

FIG.1

FIG. 2

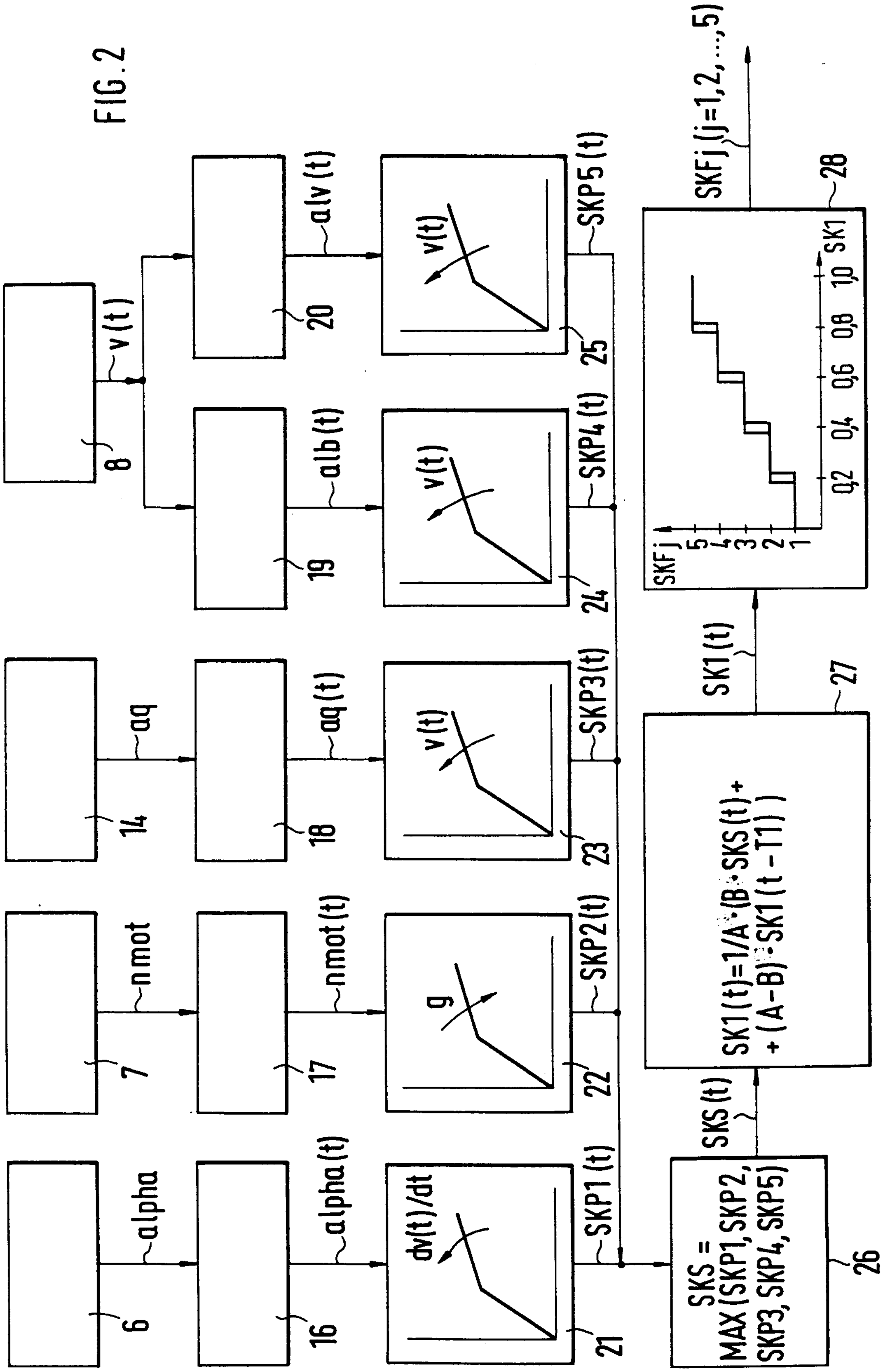
6
alpha
16
alpha(t)
dv(t)/dt
21
SKP1(t)
7
nmot
17
nmot(t)
g
22
SKP2(t)
14
aq
18
aq(t)
v(t)
23
SKP3(t)
8
v(t)
19
alb(t)
v(t)
24
SKP4(t)
20
alv(t)
v(t)
25
SKP5(t)
SKS = MAX(SKP1, SKP2, SKP3, SKP4, SKP5)
26
SKS(t)
SK1(t)=1/A·(B·SKS(t)+
+(A−B)·SK1(t−T1))
27
SK1(t)
SKFj
1
2
3
4
5
0,2
0,4
0,6
0,8
1,0
SK1
28
SKFj (j=1,2,...,5)

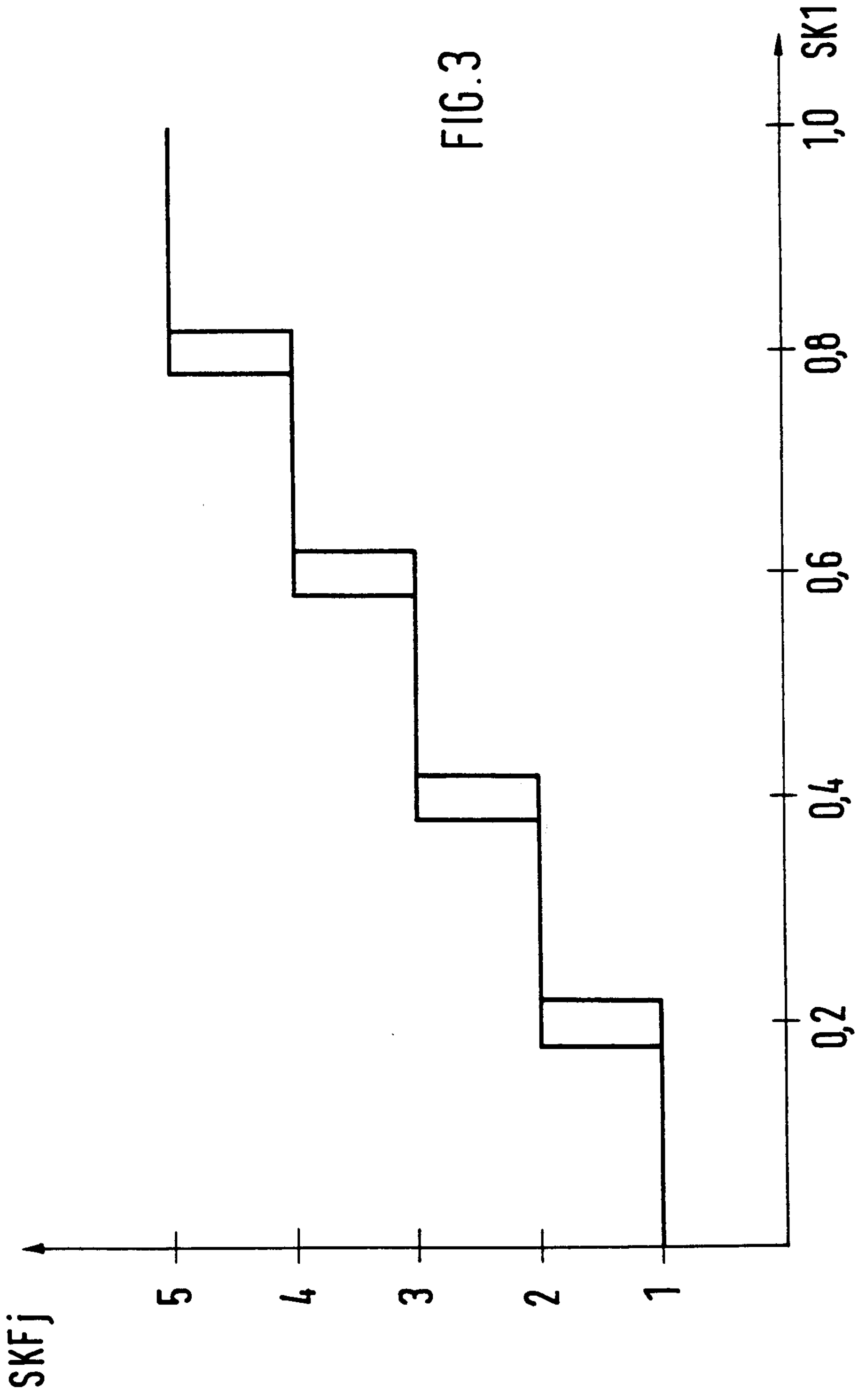


FIG. 3

FIG.4

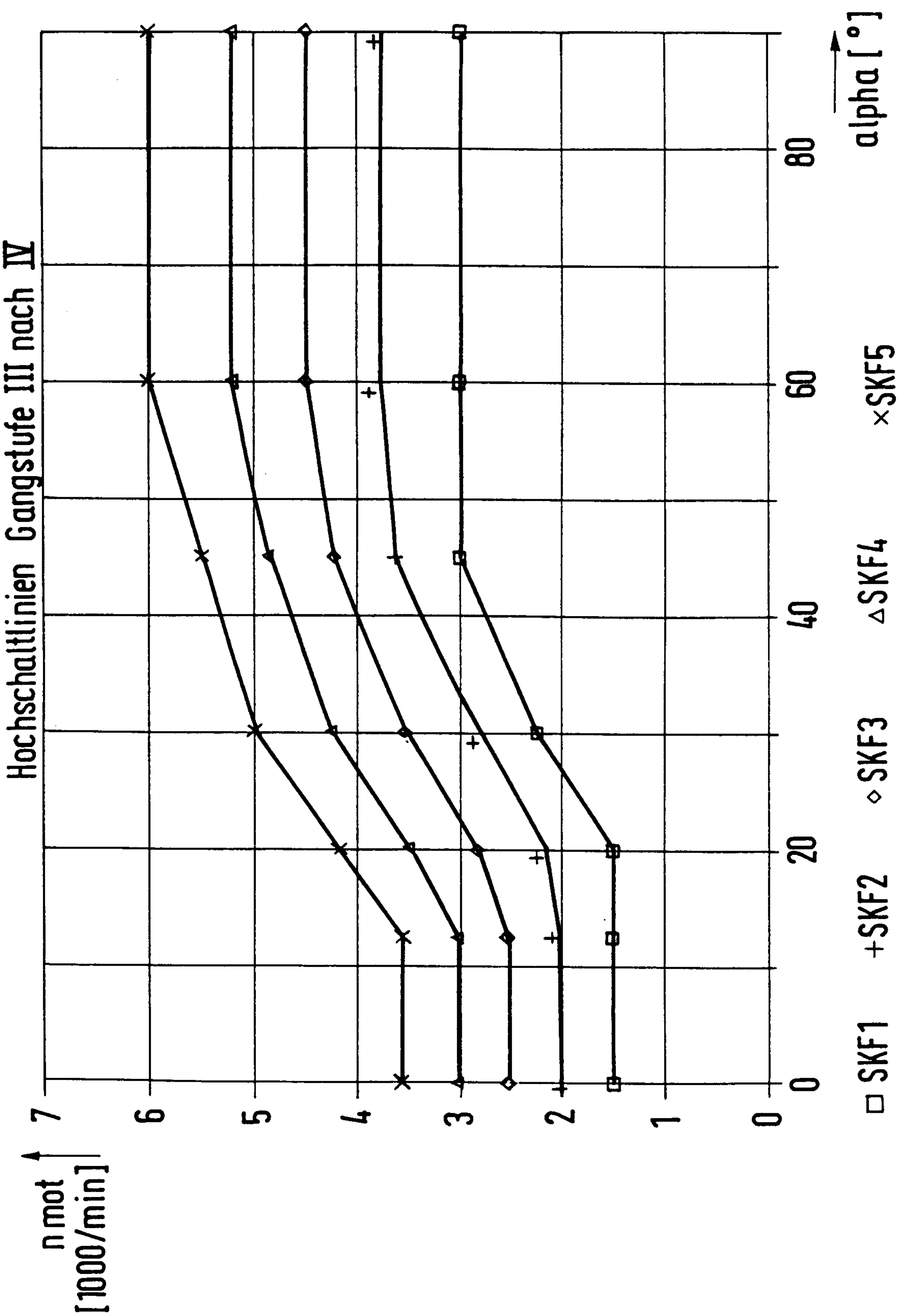

Hochschaltlinien Gangstufe III nach IV
n mot [1000/min]
0
1
2
3
4
5
6
7
0
20
40
60
80
alpha [°]
□ SKF1
+SKF2
◇SKF3
△SKF4
×SKF5

FIG.5

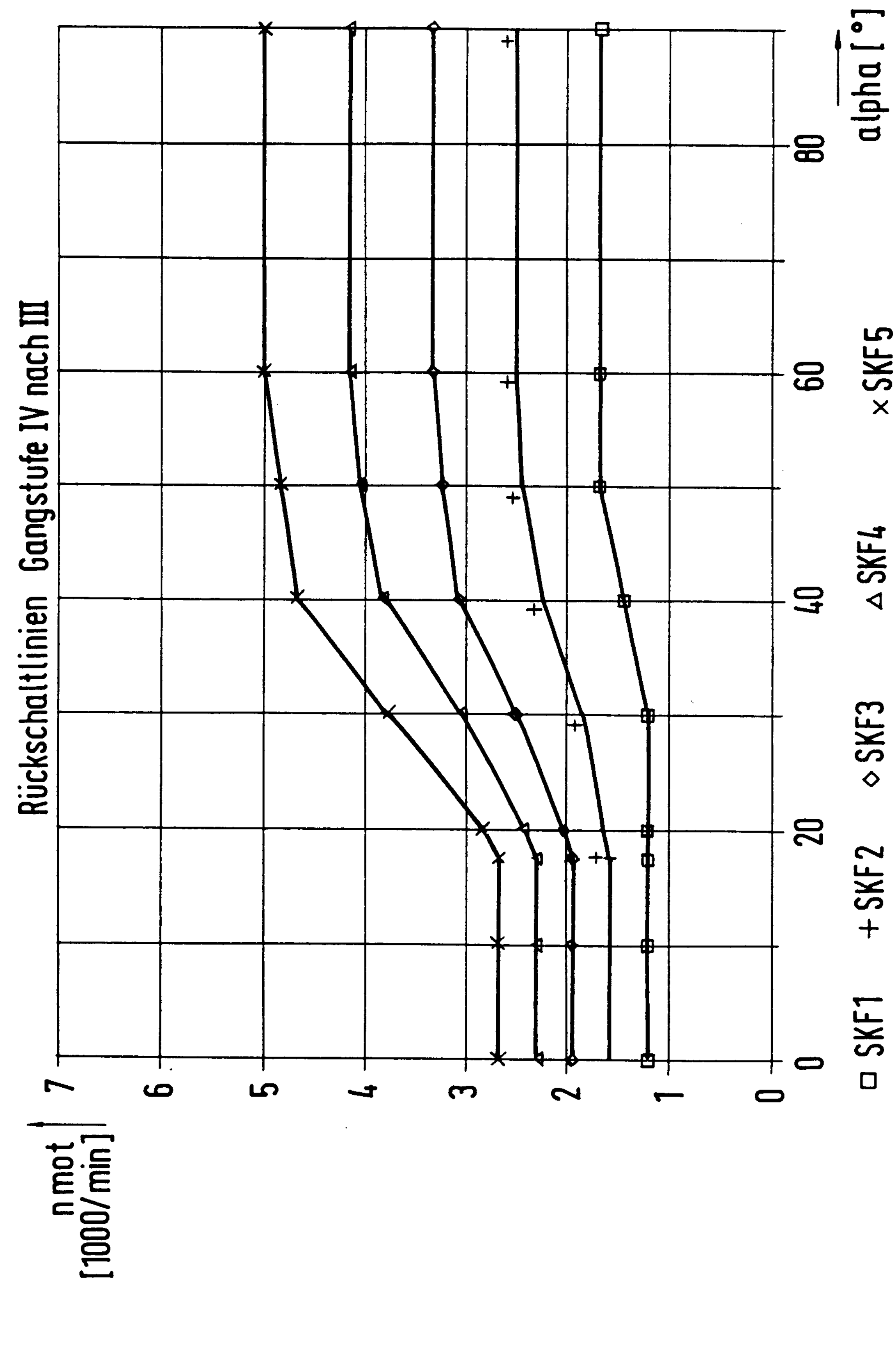
Rückschaltlinien Gangstufe IV nach III
n mot [1000/min]
0
1
2
3
4
5
6
7
0
20
40
60
80
alpha [°]
□ SKF1 + SKF2 ◇ SKF3 △ SKF4 × SKF5

FIG.6

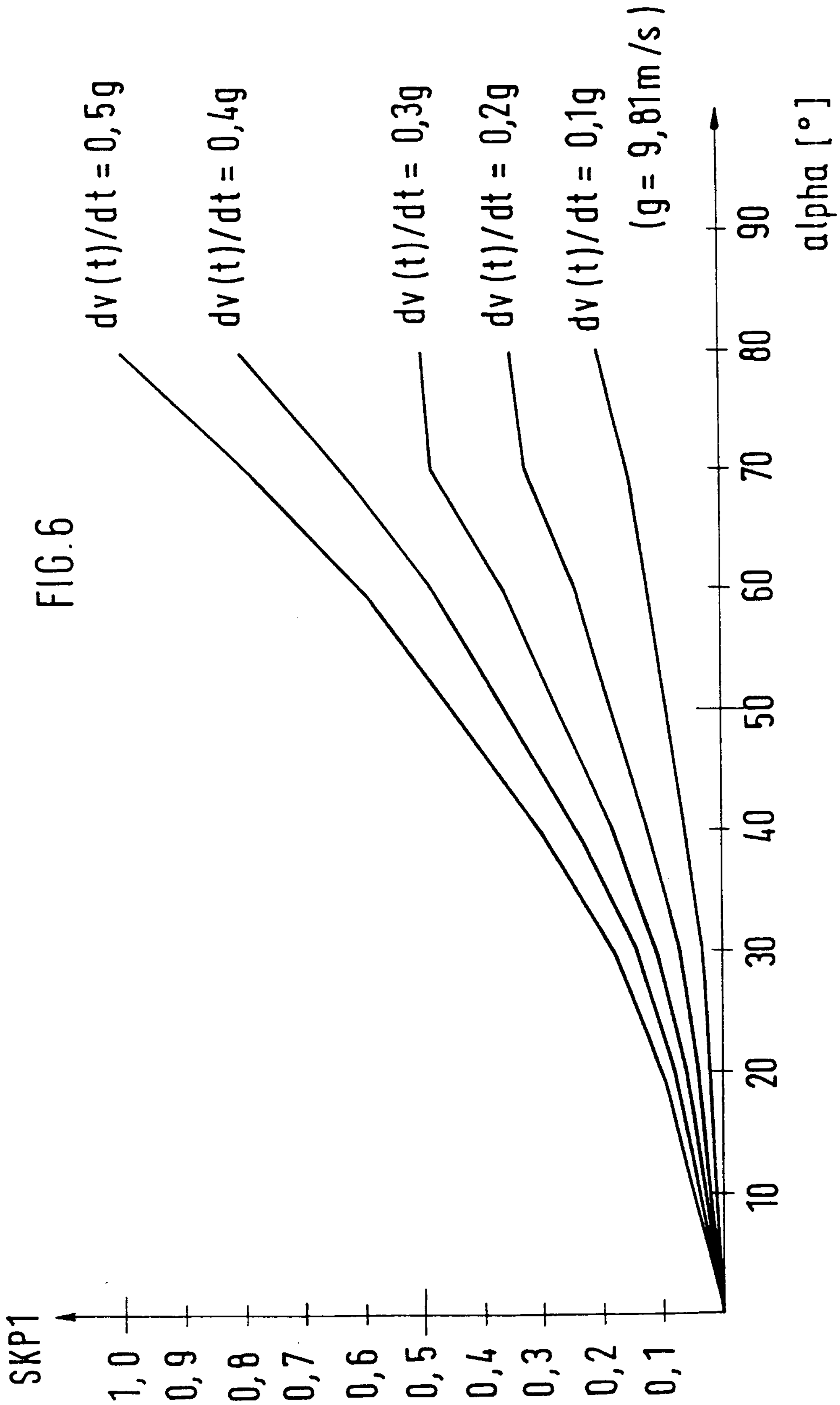
SKP1
1,0
0,9
0,8
0,7
0,6
0,5
0,4
0,3
0,2
0,1
10
20
30
40
50
60
70
80
90
alpha [°]
dv(t)/dt = 0,5g
dv(t)/dt = 0,4g
dv(t)/dt = 0,3g
dv(t)/dt = 0,2g
dv(t)/dt = 0,1g
(g = 9,81m/s)

FIG.7

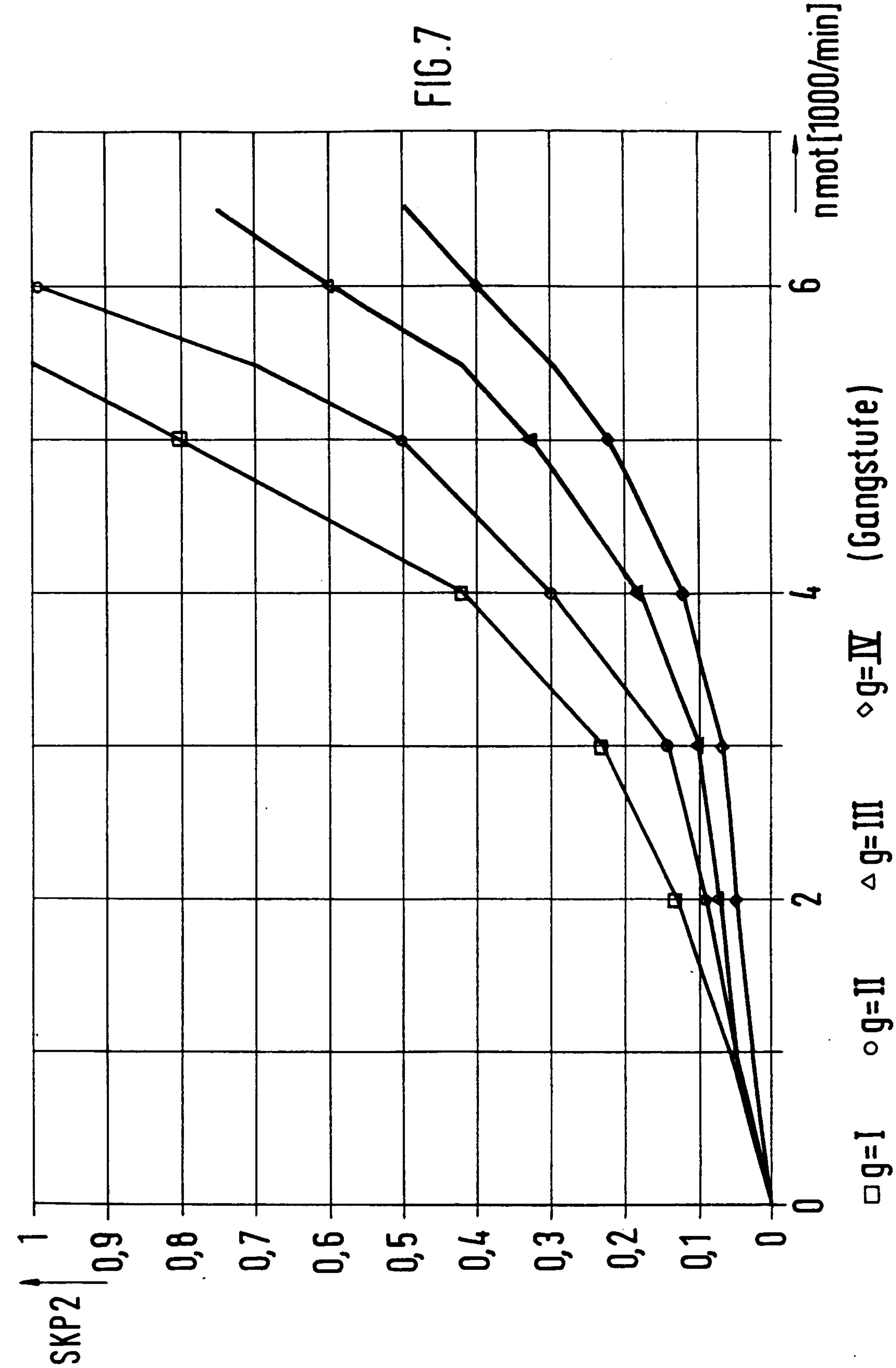
SKP2
1
0,9
0,8
0,7
0,6
0,5
0,4
0,3
0,2
0,1
0
0
2
4
6
nmot [1000/min]
□ g=I
○ g=II
△ g=III
◇ g=IV
(Gangstufe)

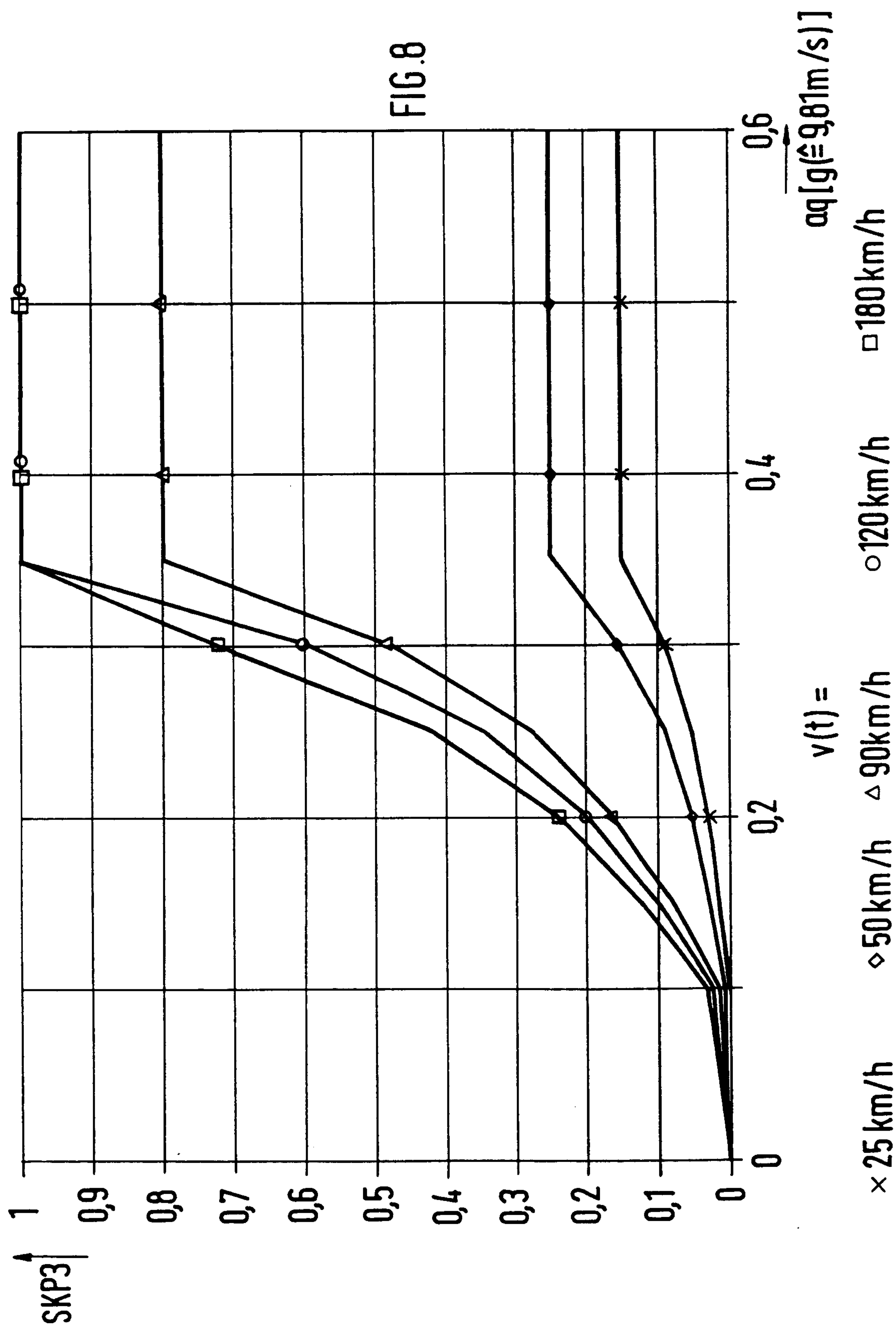
SKP3
1
0,9
0,8
0,7
0,6
0,5
0,4
0,3
0,2
0,1
0
0
0,2
0,4
0,6
aq[g(≙9,81m/s)]
v(t) =
× 25 km/h
◇ 50 km/h
△ 90 km/h
○ 120 km/h
□ 180 km/h

FIG. 8

FIG.9

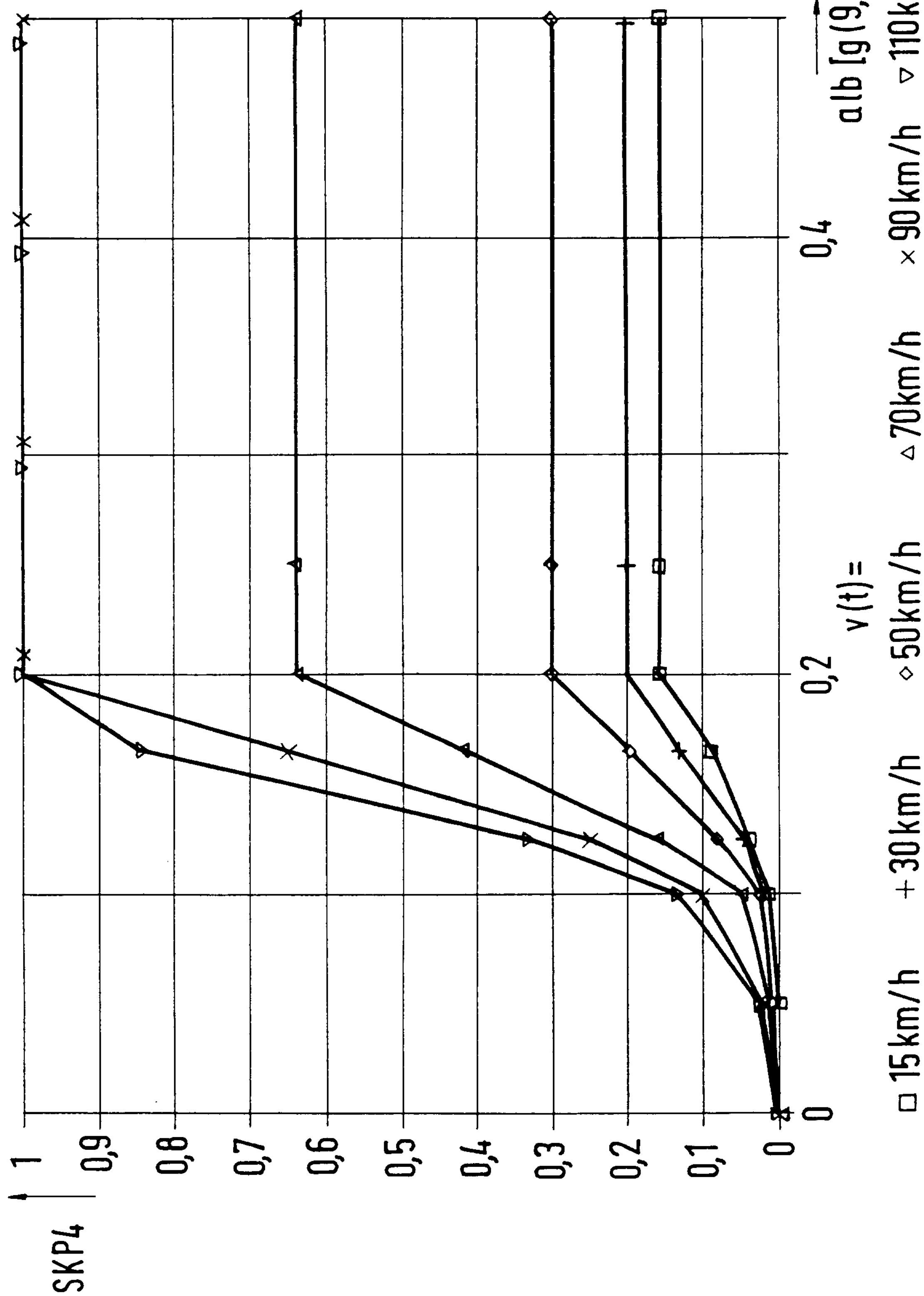
SKP4
1
0,9
0,8
0,7
0,6
0,5
0,4
0,3
0,2
0,1
0
0
0,2
0,4
a/b [g(9,81m/s)]
v(t)=
□ 15km/h
+ 30km/h
◇ 50km/h
△ 70km/h
× 90km/h
▽ 110km/h

FIG.10

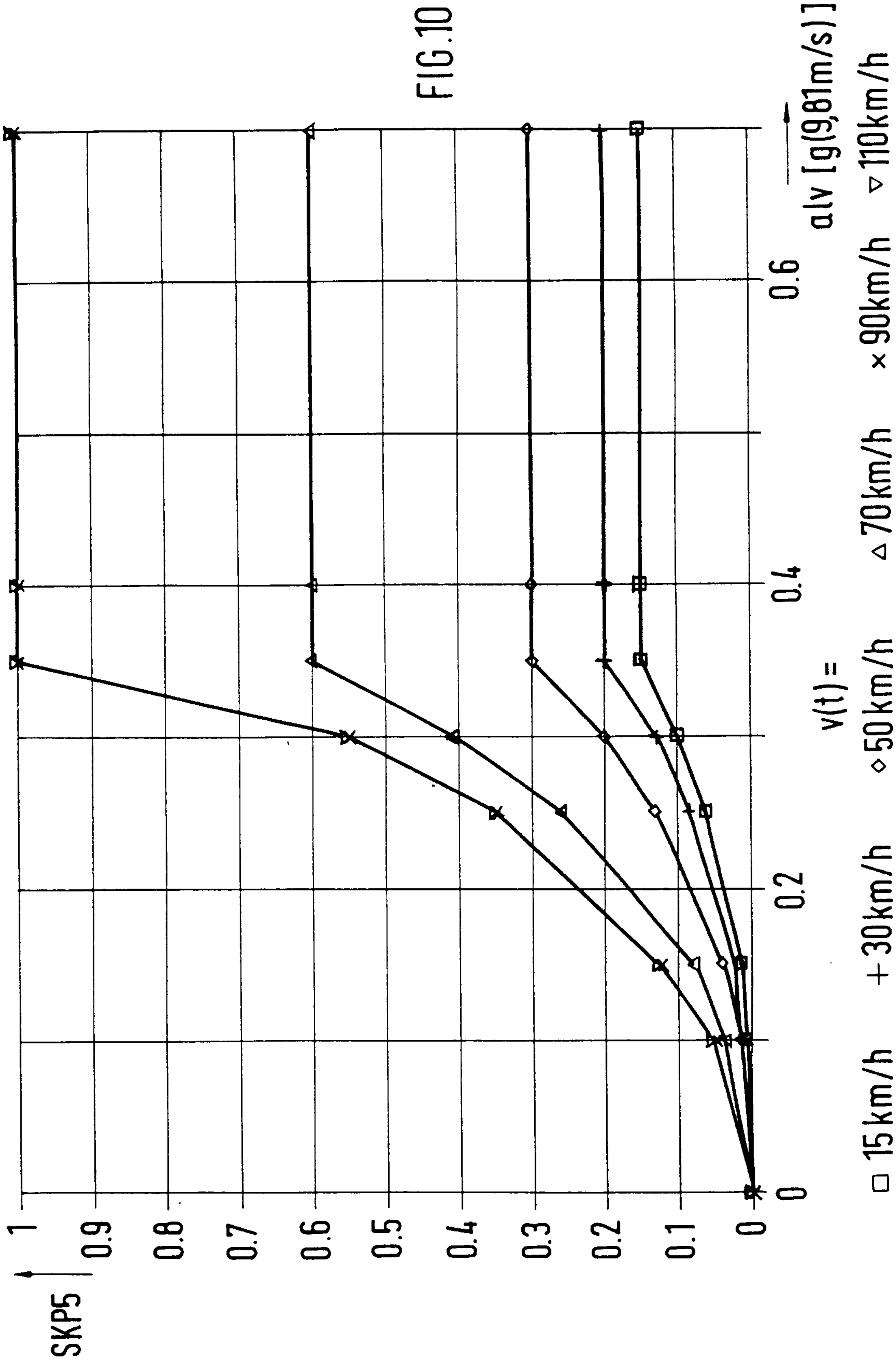
SKP5
0
0.1
0.2
0.3
0.4
0.5
0.6
0.7
0.8
0.9
1
0
0.2
0.4
0.6
alv [g(9,81m/s)]
v(t) =
□ 15km/h + 30km/h ◇ 50km/h △ 70km/h × 90km/h ▽ 110km/h

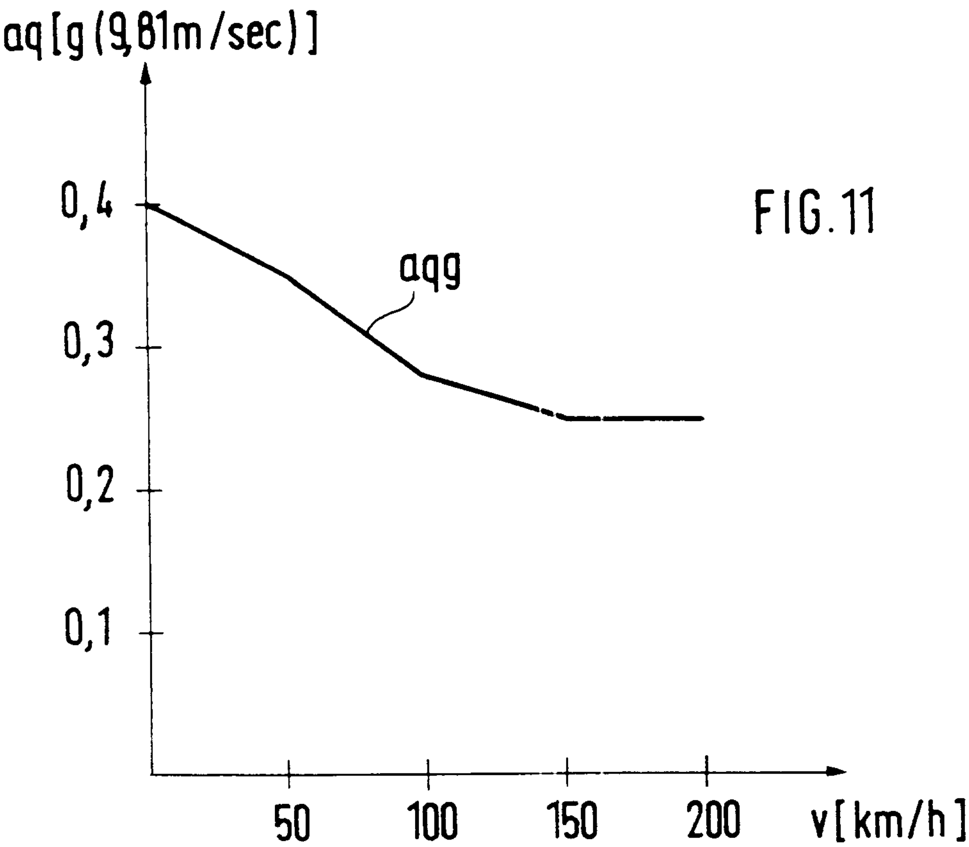
aq [g (9,81m/sec)]
0,4
0,3
0,2
0,1
aqg
50
100
150
200
v [km/h]

FIG. 11

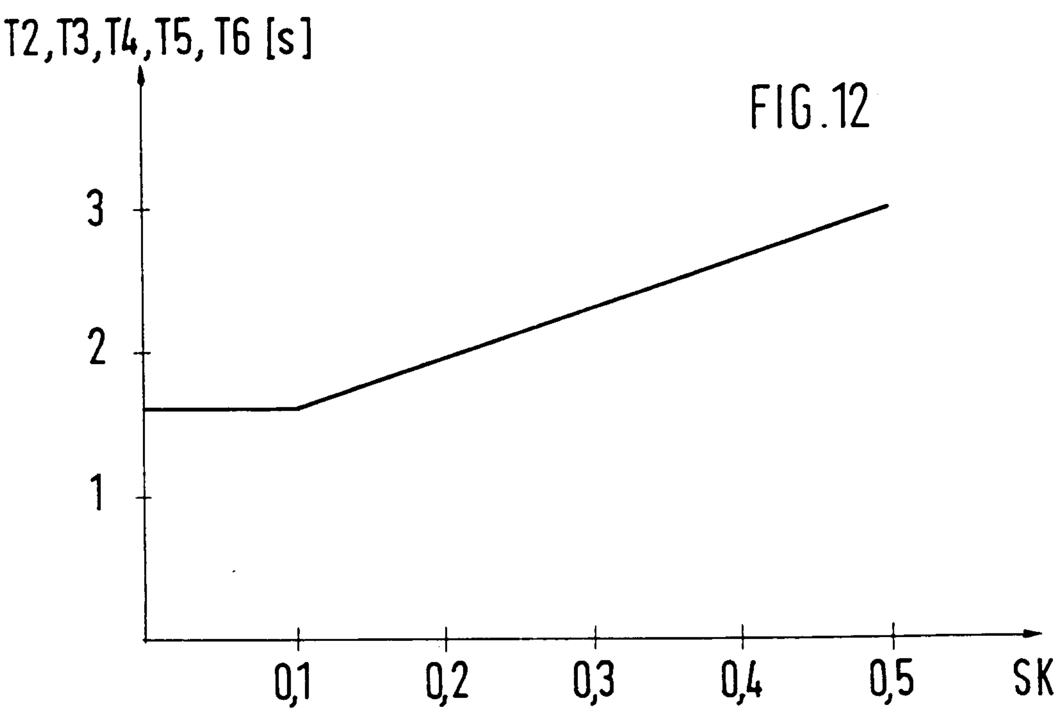
T2, T3, T4, T5, T6 [s]
3
2
1
0,1
0,2
0,3
0,4
0,5
SK

FIG. 12

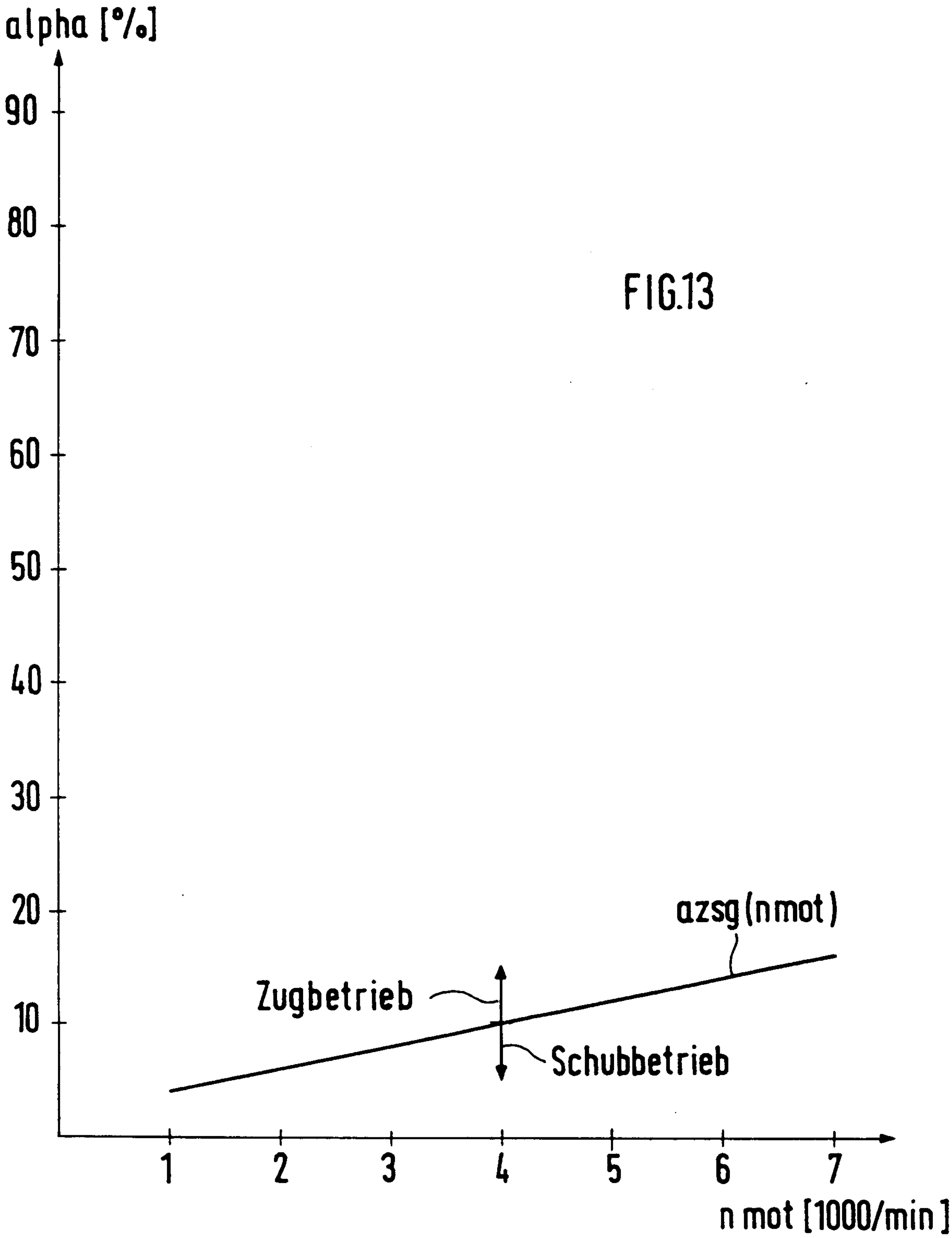
alpha [%]
90
80
70
60
50
40
30
20
10
azsg (nmot)
Zugbetrieb
Schubbetrieb
1
2
3
4
5
6
7
n mot [1000/min]

FIG.13